# EUROPEAN PATENT APPLICATION

(11) **EP 4 788 019 A1**
(43) Date of publication of application: **05.08.2026**
(21) Application number: 23953805.1
(22) Date of filing: 28.09.2023
(51) Int. Cl.: H04W 72/231

(54) **CHANNEL STATE INFORMATION (CSI) REPORT CONFIGURATION ACTIVATION METHOD, COMMUNICATION DEVICE, AND STORAGE MEDIUM**

(71) Applicant: Beijing Xiaomi Mobile Software Co., Ltd., Beijing 100085 (CN)
(72) Inventor: WU, Shijuan, Beijing 100085 (CN)
(74) Representative: Gunzelmann, Rainer
(86) International application number: PCT/CN2023/122972
(87) International publication number: WO 2025/065661

(57) **Abstract**

Embodiments of the present disclosure provide a channel state information (CSI) report configuration activation method and apparatus, a communication device, a communication system, and a storage medium. The method comprises: sending control signaling to a terminal, wherein the control signaling is used for the terminal to determine whether to enter a fallback state of a CSI report configuration.

## Description

### FIELD

The present disclosure relates to the field of communication technologies, and in particular to a channel state information (CSI) report configuration activation method, a communication device, and a storage medium.

### BACKGROUND

With the development of communication technologies, the concept of network energy saving has been proposed. The network energy saving may achieve environmental protection. However, how to achieve the network energy saving while ensuring the wireless communication quality of devices is also a problem that needs to be solved.

### SUMMARY

With the development of technologies, the energy-saving technology of channel state information (CSI) is proposed in the context of network energy saving.

Embodiments of the present disclosure provide a channel state information (CSI) report configuration activation method and apparatus, a communication device, and a storage medium.

According to a first aspect of embodiments of the present disclosure, a channel state information (CSI) report configuration activation method is provided, and the method includes: sending a control signaling to a terminal. The control signaling is configured for the terminal to determine whether to enter a fallback state of a CSI report configuration. In the fallback state of the CSI report configuration, the terminal performs CSI measurement reporting based on a first parameter of the CSI report configuration.

According to a second aspect of embodiments of the present disclosure, a channel state information (CSI) report configuration activation method is provided, and the method includes: receiving a control signaling sent by a network device. The control signaling is configured for the terminal to determine whether to enter a fallback state of a CSI report configuration. In the fallback state of the CSI report configuration, the terminal performs CSI measurement reporting based on a first parameter of the CSI report configuration.

According to a third aspect of embodiments of the present disclosure, a network device is provided, and the network device includes: a sending module configured to send a control signaling to a terminal. The control signaling is used for the terminal to determine whether to enter a fallback state of a CSI report configuration. In the fallback state of the CSI report configuration, the terminal performs CSI measurement reporting based on a first parameter of the CSI report configuration.

According to a fourth aspect of embodiments of the present disclosure, a terminal is provided, and the terminal includes: a receiving module configured to receive a control signaling sent by a network device. The control signaling is configured for the terminal to determine whether to enter a fallback state of a CSI report configuration. In the fallback state of the CSI report configuration, the terminal performs CSI measurement reporting based on a first parameter of the CSI report configuration.

According to a fifth aspect of embodiments of the present disclosure, a communication device is provided, and the communication device includes: one or more processors used to call instructions to cause the communication device to perform the method provided by the first aspect or the second aspect.

According to an eighth aspect of embodiments of the present disclosure, a storage medium is provided, and the storage medium stores instructions, which are used to, when executed on a communication device, cause the communication device to perform the method provided by the first aspect or the second aspect.

The technical solution provided by the embodiments of the present disclosure realizes activation or deactivation based on sub-configurations, and thus realizes activation or deactivation at a finer granularity than the CSI report configuration, thereby reducing measurement power consumption of the terminal and saving bit overhead.

It should be understood that the foregoing general description and the following detailed description are illustrative and explanatory only and are not restrictive of the embodiments of the present disclosure.

### BRIEF DESCRIPTION OF THE DRAWINGS

The accompanying drawings herein are incorporated in and constitute a part of the specification, illustrate embodiments consistent with the present disclosure, and together with the description, serve to explain the principles of the embodiments of the present disclosure.
FIG. 1A is a schematic diagram showing an architecture of a communication system according to an illustrative embodiment.
FIG. 1B is a schematic diagram of a media access control (MAC) control element (CE) according to an illustrative embodiment.
FIG. 2A is an interactive schematic diagram showing a channel state information (CSI) report configuration activation method according to an illustrative embodiment.
FIG. 2B is an interactive schematic diagram showing a channel state information (CSI) report configuration activation method according to an illustrative embodiment.
FIG. 2C is an interactive schematic diagram showing a channel state information (CSI) report configuration activation method according to an illustrative embodiment.
FIG. 2D is an interactive schematic diagram showing a channel state information (CSI) report configuration activation method according to an illustrative embodiment.
FIG. 2E is an interactive schematic diagram showing a channel state information (CSI) report configuration activation method according to an illustrative embodiment.
FIG. 3A is a flow chart of a channel state information (CSI) report configuration activation method according to an illustrative embodiment.
FIG. 3B is a flow chart of a channel state information (CSI) report configuration activation method according to an illustrative embodiment.
FIG. 3C is a flow chart of a channel state information (CSI) report configuration activation method according to an illustrative embodiment.
FIG. 3D is a flow chart of a channel state information (CSI) report configuration activation method according to an illustrative embodiment.
FIG. 4A is a flow chart of a channel state information (CSI) report configuration activation method according to an illustrative embodiment.
FIG. 4B is a flow chart of a channel state information (CSI) report configuration activation method according to an illustrative embodiment.
FIG. 4C is a flow chart of a channel state information (CSI) report configuration activation method according to an illustrative embodiment.
FIG. 4D is a flow chart of a channel state information (CSI) report configuration activation method according to an illustrative embodiment.
FIG. 5A is a schematic diagram of a MAC CE according to an illustrative embodiment.
FIG. 5B is a schematic diagram of a MAC CE according to an illustrative embodiment.
FIG. 5C is a schematic diagram of a MAC CE according to an illustrative embodiment.
FIG. 6A is a block diagram of a network device according to an illustrative embodiment.
FIG. 6B is a block diagram of a terminal according to an illustrative embodiment.
FIG. 7A is a block diagram of a terminal according to an illustrative embodiment.
Fig. 7B is a block diagram of a communication device according to an illustrative embodiment.

### DETAILED DESCRIPTION

Embodiments of the present disclosure provide a channel state information (CSI) report configuration activation method and apparatus, a communication device, a communication system, and a storage medium.

In a first aspect, embodiments of the present disclosure provide a channel state information (CSI) report configuration activation method, and the method includes: sending a control signaling to a terminal. The control signaling is configured for the terminal to determine whether to enter a fallback state of a CSI report configuration. In the fallback state of the CSI report configuration, the terminal performs CSI measurement reporting based on a first parameter of the CSI report configuration.

In the above embodiments, the network device may enable the terminal to determine whether to enter the fallback state of the CSI report configuration by sending the control signaling.

In combination with some embodiments of the first aspect, in some embodiments, a sub-configuration of the CSI report configuration includes a first sub-configuration and at least one second sub-configuration; the first sub-configuration carries a first parameter; and the at least one second sub-configuration is different from the first sub-configuration.

In the above embodiments, the first parameter for the CSI measurement reporting performed by the terminal when the terminal enters the fallback state of the CSI report configuration is carried in one sub-configuration, so that the first parameter may be sent through one sub-configuration.

In combination with some embodiments of the first aspect, in some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In the above embodiments, the first sub-configuration is determined in the above manner, which is easy to implement and may quickly distinguish the first sub-configuration from the second sub-configuration without using a special indication signaling to distinguish the first sub-configuration from the second sub-configuration.

In combination with some embodiments of the first aspect, in some embodiments, the specified index includes index 0.

In combination with some embodiments of the first aspect, in some embodiments, the CSI report configuration includes at least one second sub-configuration and a first parameter, and the first parameter is a CSI parameter included in a part of the CSI report configuration different from the at least one second sub-configuration.

Based on the above solution, all the sub-configurations of the CSI report configuration are the second sub-configurations, and the first parameter is carried in the part of the CSI report configuration different from the second sub-configuration, which is equivalent to providing another composition manner of the CSI report configuration, thus facilitating flexible determination during specific implementation.

In combination with some embodiments of the first aspect, in some embodiments, the control signaling includes a first type of media access control (MAC) control element (CE); and the first type of MAC CE includes a first indication bit, and the first indication bit is configured to activate or deactivate the sub-configuration of the CSI report configuration.

In the above embodiments, at least one first-class bit may indicate activation or deactivation of at least one sub-configuration in the CSI report configuration through a bitmap, thereby utilizing the correspondence between the bits in the bitmap and the sub-configuration, and effectively reducing the decoding complexity of the first-class bit in the first type of MAC CE. Alternatively, at least one first-class bit may indicate the activation or deactivation of at least one sub-configuration in the CSI report configuration through joint indication information, thereby utilizing a smaller number of first-class bits to indicate a combination relationship of activation or deactivation of more sub-configurations, and effectively reducing the number of bits occupied by the first type of MAC CE.

In combination with some embodiments of the first aspect, in some embodiments, the first type of MAC CE further includes a second indication bit indicating whether to perform CSI measurement reporting based on the first parameter; and in a case that the second indication bit indicates that the CSI measurement reporting is performed based on the first parameter and no sub-configuration of the CSI report configuration is activated, the first type of MAC CE is configured to instruct the terminal to enter the fallback state of the CSI report configuration; or, in a case that the second indication bit indicates that the CSI measurement reporting is not performed based on the first parameter and the first type of MAC CE indicates that no sub-configuration in the CSI report configuration is activated, the first type of MAC CE is configured to instruct the terminal not to enter the fallback state of the CSI report configuration.

In the above embodiments, by introducing the second indication bit, the terminal may quickly determine whether to perform the CSI measurement reporting based on the first parameter according to the second indication bit of the first type of MAC CE.

In combination with some embodiments of the first aspect, in some embodiments, in a case that the second indication bit indicates that the CSI measurement reporting is not performed based on the first parameter and the first type of MAC CE indicates that the sub-configuration of the CSI report configuration is not activated, the first type of MAC CE is configured to instruct the terminal not to perform the CSI measurement reporting.

In the above embodiments, the first type of MAC CE indicates that the CSI measurement reporting is not performed, thereby realizing the multiple indication functions of the first type of MAC CE.

In combination with some embodiments of the first aspect, in some embodiments, the first type of MAC CE further includes: a third indication bit configured to activate or deactivate the CSI report configuration.

Based on the above solution, the first type of MAC CE further includes the third indication bit, and the third indication bit may indicate the activation or deactivation of the CSI report configuration granularity.

In combination with some embodiments of the first aspect, in some embodiments, the first indication bit and the third indication bit are located in different octets of the first type of MAC CE; or, at least part of the first indication bit and at least part of the third indication bit are located in a same octet of the first type of MAC CE.

In the above embodiments, that the first indication bit and the third indication bit are located in the same octet and that the first indication bit and the third indication bit are located in different octets correspond to two kinds of MAC CEs, thus facilitating the subsequent flexible selection of the first type of MAC CE to be used according to needs.

In combination with some embodiments of the first aspect, in some embodiments, the control signaling includes downlink control information (DCI); the DCI includes a first indication field; and the first indication field indicates a trigger state, and the trigger state corresponds to an activation state combination of the CSI report configuration.

In the above embodiments, the DCI may be used to instruct the terminal whether to enter the fallback state of the CSI report configuration, and the instruction manner based on the DCI exhibits the characteristic of high dynamic performance.

In combination with some embodiments of the first aspect, in some embodiments, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or, in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

In combination with some embodiments of the first aspect, in some embodiments, in a case that the first indication field corresponds to a case that at least one CSI report configuration is activated and none of sub-configurations of the activated at least one CSI report configuration is activated, the DCI instructs the terminal to enter the fallback state of the CSI report configuration; or, in a case that the first indication field corresponds to a case that at least one CSI report configuration is activated and at least one sub-configuration of the activated at least one CSI report configuration is activated, the DCI instructs the terminal not to enter the fallback state of the CSI report configuration; or, in a case that the first indication field corresponds to a case that at least one CSI report configuration is activated and no sub-configuration of the activated at least one CSI report configuration is activated, the DCI instructs the terminal to enter the fallback state of the CSI report configuration; or, in a case that the first indication field corresponds to a case that at least one CSI report configuration is activated and the activated at least one CSI report configuration has an activated sub-configuration, the DCI instructs the terminal not to enter the fallback state of the CSI report configuration.

In the above embodiments, several implementations are provided, in which only the first indication field of the DCI is used for the terminal to determine whether to enter the fallback state of the CSI report configuration.

In combination with some embodiments of the first aspect, in some embodiments, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and any sub-configuration of the activated at least one CSI report configuration is not activated.

In combination with some embodiments of the first aspect, in some embodiments, the MAC CE further includes a second type of MAC CE; the second type of MAC CE is configured for activation or deactivation of the CSI report configuration; and the second type of MAC CE does not include the first indication bit.

In the above embodiments, the second indication field is newly added to the DCI, and the second indication field may be used to instruct the terminal whether to enter the fallback state of the CSI report configuration.

In combination with some embodiments of the first aspect, in some embodiments, sending by the network device the control signaling to the terminal includes: sending the second type of MAC CE to the terminal after sending the first type of MAC CE to the terminal, where the first type of MAC CE and the second type of MAC CE are configured for the terminal to determine whether to enter the fallback state of the CSI report configuration.

In the above embodiments, it is defined how to control whether the terminal enters the fallback state of the CSI reporting state in the scenario where the first type of MAC CE and the second type of MAC CE coexist.

In combination with some embodiments of the first aspect, in some embodiments, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration and instruct the terminal not to enter a fallback state of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration, and instruct the terminal not to enter a fallback state of the x-th CSI report configuration.

In the above embodiments, it is defined how to determine whether to enter the fallback state of the CSI report configuration according to the first type of MAC CE and the second type of MAC CE, in a case that the terminal first receives the first type of MAC CE and then receives the second type of MAC CE.

In combination with some embodiments of the first aspect, in some embodiments, sending by the network device the control signaling to the terminal includes: sending the first type of MAC CE to the terminal after sending the second type of MAC CE to the terminal, where the first type of MAC CE is configured for the terminal to determine whether to enter the fallback state of the CSI report configuration; or, sending the second type of MAC CE to the terminal, where the second type of MAC CE is configured for the terminal to determine whether to enter the fallback state of the CSI report configuration.

Based on the above solution, in a case that both the first type of MAC CE and the second type of MAC CE are sent, when the second type of MAC CE is sent before the first type of MAC CE, it is possible to directly determine whether the terminal enters the fallback state of the CSI report configuration according to the first type of MAC CE, which is simple to be implemented.

In combination with some embodiments of the first aspect, in some embodiments, in a case that the second type of MAC CE indicates activation of an n-th CSI report configuration, the second type of MAC CE indicates activation of all sub-configurations of the n-th CSI report configuration, and instruct the terminal not to enter a fallback state of the n-th CSI report configuration; or, in a case that the second type of MAC CE indicates activation of an n-th CSI report configuration, the second type of MAC CE is configured to instruct the terminal to enter a fallback state of the n-th CSI report configuration.

Based on the above solution, it is defined how to determine whether to enter the fallback state of the n-th CSI report configuration according to the second type of MAC CE in a case that the second type of MAC CE is sent separately.

In a second aspect, embodiments of the present disclosure provide a channel state information (CSI) report configuration activation method, and the method includes: receiving a control signaling sent by a network device. The control signaling is configured for the terminal to determine whether to enter a fallback state of a CSI report configuration. In the fallback state of the CSI report configuration, the terminal performs CSI measurement reporting based on a first parameter of the CSI report configuration.

In combination with some embodiments of the second aspect, in some embodiments, a sub-configuration of the CSI report configuration includes a first sub-configuration and at least one second sub-configuration; the first sub-configuration carries a first parameter; and the at least one second sub-configuration is different from the first sub-configuration.

In combination with some embodiments of the second aspect, in some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In combination with some embodiments of the second aspect, in some embodiments, the specified index includes index 0.

In combination with some embodiments of the second aspect, in some embodiments, the CSI report configuration includes at least one second sub-configuration and a first parameter, and the first parameter is a CSI parameter included in a part of the CSI report configuration different from the at least one second sub-configuration.

In combination with some embodiments of the second aspect, in some embodiments, the control signaling includes a first type of media access control (MAC) control element (CE); and the first type of MAC CE includes a first indication bit, and the first indication bit is configured to activate or deactivate the sub-configuration of the CSI report configuration.

In combination with some embodiments of the second aspect, in some embodiments, the first type of MAC CE further includes a second indication bit indicating whether to perform CSI measurement reporting based on the first parameter; and in a case that the second indication bit indicates that the CSI measurement reporting is performed based on the first parameter, the first type of MAC CE is configured to instruct the terminal to enter the fallback state of the CSI report configuration; or, in a case that the second indication bit indicates that the CSI measurement reporting is not performed based on the first parameter and the first type of MAC CE indicates activation of at least one sub-configuration in the CSI report configuration, the first type of MAC CE is configured to instruct the terminal not to enter the fallback state of the CSI report configuration.

In combination with some embodiments of the second aspect, in some embodiments, in a case that the second indication bit indicates that the CSI measurement reporting is not performed based on the first parameter and the first type of MAC CE indicates that the sub-configuration of the CSI report configuration is not activated, the first type of MAC CE is configured to instruct the terminal not to perform the CSI measurement reporting.

In combination with some embodiments of the second aspect, in some embodiments, the first type of MAC CE includes: a third indication bit configured to activate or deactivate the CSI report configuration.

In combination with some embodiments of the second aspect, in some embodiments, the first indication bit and the third indication bit are located in different octets of the first type of MAC CE; or, at least part of the first indication bit and at least part of the third indication bit are located in a same octet of the first type of MAC CE.

In combination with some embodiments of the second aspect, in some embodiments, the control signaling includes downlink control information (DCI); the DCI includes a first indication field; and the first indication field indicates a trigger state, and the trigger state corresponds to an activation state combination of the CSI report configuration.

In combination with some embodiments of the second aspect, in some embodiments, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or, in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

In combination with some embodiments of the second aspect, in some embodiments, in a case that the first indication field corresponds to a case that at least one CSI report configuration is activated and none of sub-configurations of the activated at least one CSI report configuration is activated, the DCI instructs the terminal to enter the fallback state of the CSI report configuration; or, in a case that the first indication field corresponds to a case that at least one CSI report configuration is activated and at least one sub-configuration of the activated at least one CSI report configuration is activated, the DCI instructs the terminal not to enter the fallback state of the CSI report configuration; or, in a case that the first indication field corresponds to a case that at least one CSI report configuration is activated and no sub-configuration of the activated at least one CSI report configuration is activated, the DCI instructs the terminal to enter the fallback state of the CSI report configuration; or, in a case that the first indication field corresponds to a case that at least one CSI report configuration is activated and the activated at least one CSI report configuration has an activated sub-configuration, the DCI instructs the terminal not to enter the fallback state of the CSI report configuration.

In combination with some embodiments of the second aspect, in some embodiments, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and any sub-configuration of the activated at least one CSI report configuration is not activated.

In combination with some embodiments of the second aspect, in some embodiments, the MAC CE further includes a second type of MAC CE; the second type of MAC CE is configured for activation or deactivation of the CSI report configuration; and the second type of MAC CE does not include the first indication bit.

In combination with some embodiments of the second aspect, in some embodiments, receiving the control signaling sent by the network device includes: receiving the second type of MAC CE sent by the network device after receiving the first type of MAC CE sent by the network device, where the first type of MAC CE and the second type of MAC CE are configured for the terminal to determine whether to enter the fallback state of the CSI report configuration.

In combination with some embodiments of the second aspect, in some embodiments, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration and instruct the terminal not to enter a fallback state of the x-th CSI report configuration; or, in a case that the second type of MAC CE indicates activation of a y-th CSI report configuration, the first type of MAC CE and the second type of MAC CE are configured to maintain deactivation of a sub-configuration in the y-th CSI report configuration, activation of an x-th CSI report configuration, and activation of a sub-configuration of the x-th CSI report configuration, and instruct the terminal not to enter a fallback state of the x-th CSI report configuration.

In combination with some embodiments of the second aspect, in some embodiments, the method further includes: stopping by the terminal receiving the second type of MAC CE sent by the network device in case of receiving the first type of MAC CE sent by the network device.

In combination with some embodiments of the second aspect, in some embodiments, the method further includes: receiving a second type of MAC CE sent by the network device after receiving a first type of MAC CE, and determining by the terminal whether to enter the fallback state of the CSI report configuration according to the second type of MAC CE; or, receiving a second type of MAC CE sent by the network device after receiving a first type of MAC CE, and ignoring the first type of MAC CE.

In combination with some embodiments of the second aspect, in some embodiments, in a case that the second type of MAC CE indicates activation of an n-th CSI report configuration, the first type of MAC CE indicates activation of all sub-configurations of the n-th CSI report configuration, and instruct the terminal not to enter a fallback state of the n-th CSI report configuration; or, in a case that the second type of MAC CE indicates activation of an n-th CSI report configuration, the first type of MAC CE and the second type of MAC CE indicate deactivation of all sub-configurations of the n-th CSI report configuration, and instruct the terminal to enter a fallback state of the n-th CSI report configuration.

In a third aspect, embodiments of the present disclosure provide a channel state information (CSI) report configuration activation method, and the method includes: sending a control signaling to a terminal, where the control signaling is configured for the terminal to determine whether to enter a fallback state of a CSI report configuration.

Based on the above solution, a sub-configuration of the CSI report configuration includes a first sub-configuration and at least one second sub-configuration; the first sub-configuration carries a first parameter; and the at least one second sub-configuration is different from the first sub-configuration.

Based on the above solution, the first sub-configuration is a sub-configuration with a smallest index in the CSI report configuration; or, an index corresponding to the first sub-configuration is equal to 0; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

Based on the above solution, the CSI report configuration includes at least one second sub-configuration and a first parameter, and the first parameter is a CSI parameter included in a part of the CSI report configuration different from the at least one second sub-configuration.

Based on the above solution, in a case that the at least one second sub-configuration is activated and/or the first sub-configuration is activated, the terminal performs CSI measurement reporting based on the sub-configuration of the CSI report configuration; and in the fallback state of the CSI report configuration, the terminal performs the CSI measurement reporting based on the first parameter of the CSI report configuration.

Based on the above solution, the control signaling includes a first type of media access control (MAC) control element (CE); and the first type of MAC CE includes a first indication bit, and the first indication bit is configured to activate or deactivate the sub-configuration of the CSI report configuration.

Based on the above solution, the first type of MAC CE further includes a second indication bit indicating whether to perform CSI measurement reporting based on the first parameter; and in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or, in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

Based on the above solution, in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

Based on the above solution, the first type of MAC CE further includes: a third indication bit configured to activate or deactivate the CSI report configuration.

Based on the above solution, the first indication bit and the third indication bit are located in different octets of the first type of MAC CE; or, at least part of the first indication bit and at least part of the third indication bit are located in a same octet of the first type of MAC CE.

Based on the above solution, the control signaling includes downlink control information (DCI); the DCI includes a first indication field; and the first indication field indicates a trigger state, and the trigger state corresponds to an activation state combination of the CSI report configuration.

Based on the above solution, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or, in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

Based on the above solution, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

Based on the above solution, the MAC CE further includes a second type of MAC CE; the second type of MAC CE is configured for activation or deactivation of the CSI report configuration; and the second type of MAC CE does not include the first indication bit.

Based on the above solution, sending by the network device the control signaling to the terminal includes: sending the second type of MAC CE to the terminal after sending the first type of MAC CE to the terminal, where the first type of MAC CE and the second type of MAC CE are configured for the terminal to determine whether to enter the fallback state of the CSI report configuration.

Based on the above solution, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

Based on the above solution, sending by the network device the control signaling to the terminal includes: sending the first type of MAC CE to the terminal after sending a second type of MAC CE to the terminal, where the first type of MAC CE is configured for the terminal to determine whether to enter the fallback state of the CSI report configuration; or, sending a second type of MAC CE to the terminal, where the second type of MAC CE is configured for the terminal to determine whether to enter the fallback state of the CSI report configuration.

Based on the above solution, in a case that the second type of MAC CE indicates activation of an n-th CSI report configuration, the second type of MAC CE indicates activation of all sub-configurations of the n-th CSI report configuration; or, in a case that the second type of MAC CE indicates activation of an n-th CSI report configuration, the second type of MAC CE is configured to instruct the terminal to enter a fallback state of the n-th CSI report configuration.

In a fourth aspect, embodiments of the present disclosure provide an information processing method, which is executed by a terminal and includes: receiving a control signaling sent by a network device, where the control signaling is configured for the terminal to determine whether to enter a fallback state of a CSI report configuration.

Based on the above solution, a sub-configuration of the CSI report configuration includes a first sub-configuration and at least one second sub-configuration; the first sub-configuration carries a first parameter; and the at least one second sub-configuration is different from the first sub-configuration.

Based on the above solution, the first sub-configuration is a sub-configuration with a smallest index in the CSI report configuration; or, an index corresponding to the first sub-configuration is equal to 0; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

Based on the above solution, the CSI report configuration includes at least one second sub-configuration and a first parameter, and the first parameter is a CSI parameter included in a part of the CSI report configuration different from the at least one second sub-configuration.

Based on the above solution, the method further includes: performing by the terminal CSI measurement reporting based on the sub-configuration of the CSI report configuration, in a case that the at least one second sub-configuration is activated and/or the first sub-configuration is activated; and performing by the terminal the CSI measurement reporting based on the first parameter of the CSI report configuration in the fallback state of the CSI report configuration.

Based on the above solution, the control signaling includes a first type of media access control (MAC) control element (CE); and the first type of MAC CE includes a first indication bit, and the first indication bit is configured to activate or deactivate the sub-configuration of the CSI report configuration.

Based on the above solution, the first type of MAC CE further includes a second indication bit indicating whether to perform CSI measurement reporting based on the first parameter; and in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or, in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

Based on the above solution, in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

Based on the above solution, the first type of MAC CE includes: a third indication bit configured to activate or deactivate the CSI report configuration.

Based on the above solution, the first indication bit and the third indication bit are located in different octets of the first type of MAC CE; or, at least part of the first indication bit and at least part of the third indication bit are located in a same octet of the first type of MAC CE.

Based on the above solution, the control signaling includes downlink control information (DCI); the DCI includes a first indication field; and the first indication field indicates a trigger state, and the trigger state corresponds to an activation state combination of the CSI report configuration.

Based on the above solution, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or, in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

Based on the above solution, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

Based on the above solution, the MAC CE further includes a second type of MAC CE; the second type of MAC CE is configured for activation or deactivation of the CSI report configuration; and the second type of MAC CE does not include the first indication bit.

Based on the above solution, receiving the control signaling sent by the network device includes: receiving the second type of MAC CE sent by the network device after receiving the first type of MAC CE sent by the network device, where the first type of MAC CE and the second type of MAC CE are configured for the terminal to determine whether to enter the fallback state of the CSI report configuration.

Based on the above solution, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

Based on the above solution, the method further includes: stopping by the terminal receiving the second type of MAC CE sent by the network device in case of receiving the first type of MAC CE sent by the network device.

Based on the above solution, the method further includes: receiving a second type of MAC CE sent by the network device after receiving a first type of MAC CE, and determining by the terminal whether to enter the fallback state of the CSI report configuration according to the second type of MAC CE; or, receiving a second type of MAC CE sent by the network device after receiving a first type of MAC CE, and ignoring the first type of MAC CE.

Based on the above solution, in a case that the second type of MAC CE indicates activation of an n-th CSI report configuration, the first type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the first type of MAC CE and the second type of MAC CE indicate deactivation of all sub-configurations of the n-th CSI report configuration, and instruct the terminal to enter a fallback state of the n-th CSI report configuration.

In a fifth aspect, embodiments of the present disclosure provide a network device, and the network device includes: a sending module configured to send a control signaling to a terminal. The control signaling is configured for the terminal to determine whether to enter a fallback state of a CSI report configuration. In the fallback state of the CSI report configuration, the terminal performs CSI measurement reporting based on a first parameter of the CSI report configuration.

In a sixth aspect, a terminal is provided, and the terminal includes: a receiving module configured to receive a control signaling sent by a network device. The control signaling is configured for the terminal to determine whether to enter a fallback state of a CSI report configuration. In the fallback state of the CSI report configuration, the terminal performs CSI measurement reporting based on a first parameter of the CSI report configuration.

In a seventh aspect, a communication device is provided, and the communication device includes: one or more processors configured to call instructions to cause the communication device to perform the method provided in the first aspect, the second aspect, the third aspect or the fourth aspect.

In an eighth aspect, embodiments of the present disclosure provide a storage medium, and the storage medium stores instructions, which are configured to, when executed on a communication device, cause the communication device to perform the method provided in the first aspect, the second aspect, the third aspect or the fourth aspect.

In a ninth aspect, embodiments of the present disclosure provide a program product, which is configured to, when executed by a communication device, cause the communication device to perform the method described in optional implementations of the first aspect or the second aspect.

In a tenth aspect, embodiments of the present disclosure provide a computer program, which is configured to, when executed on a computer, cause the computer to perform the method provided in the first aspect, the second aspect, the third aspect or the fourth aspect.

It may be understood that the above network devices, terminals, communication devices, communication systems, storage media, program products, and computer programs are all used to perform the methods provided by the embodiments of the present disclosure. Therefore, for the beneficial effects that they may achieve, reference may be made to the beneficial effects in the corresponding methods, which will not be repeated here.

In some embodiments, terms such as channel state information (CSI) report configuration activation method, information processing method, communication method, etc. may be used interchangeably, terms such as information indication device, information processing device, information transmission device, terminal, network device or communication device, etc. may be used interchangeably, and terms such as communication system, information processing system, etc. may be used interchangeably.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, the embodiments may be arbitrarily combined, for example, some or all of the steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "aforesaid", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "a plurality" refers to two or more.

In some embodiments, the terms "at least one", "one or more", "a plurality of", "multiple" and the like may be used interchangeably.

In some embodiments, "at least one of A and B", "A and/or B", "A in a case, B in another case", "B in a case, A in another case", etc., may include the following technical solutions according to the situation: in some embodiments, A (A is executed independently of B); in some embodiments, B (B is executed independently of A); in some embodiments, selection is made between A and B for execution (A and B are selectively executed); in some embodiments, A and B (both A and B are executed). When there are more branches such as A, B, C, etc., the same applies.

In some embodiments, the recording manner of "A or B" may include the following technical solutions according to the situation: in some embodiments, A (A is executed independently of B); in some embodiments, B (B is executed independently of A); in some embodiments, selection is made between A and B for execution (A and B are selectively executed). When there are more branches such as A, B, C, etc., the same applies.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, in a case that the description object is a "field", the ordinal numbers before the "field" in the "first field" and the "second field" do not limit the position or order between the "fields", and the "first" and "second" do not limit whether the "fields" they modify are in the same message, nor do they limit the order of the "first field" and the "second field". For another example, in a case that the description object is a "level", the ordinal numbers before the "level" in the "first level" and the "second level" do not limit the priority between the "levels". For another example, the number of description objects is not limited by the ordinal number, and may be one or more. Taking the "first device" as an example, the number of "devices" may be one or more. In addition, the objects modified by different prefixes may be the same or different. For example, in a case that the description object is "device", the "first device" and the "second device" may be the same device or different devices, and their types may be the same or different. For another example, in a case that the description object is "information", the "first information" and the "second information" may be the same information or different information, and their contents may be the same or different.

In some embodiments, "including A", "comprising A", "indicating A", and "carrying A" may be interpreted as directly carrying A or indirectly indicating A.

In some embodiments, terms such as "determining...", "in a case that...", "while...", "when...", "in response to...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than", and "below" may be used interchangeably.

In some embodiments, devices, etc. may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as devices included in the network (e.g., access network device, core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part" and the like may be used interchangeably.

In some embodiments, the terms "terminal", "terminal device", "user equipment (UE)", "user terminal" "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal', "handset", "user agent", "mobile client", "client" and the like may be used interchangeably.

In some embodiments, the access network device, the core network device, or the network device may be replaced with a terminal. For example, the embodiments of the present disclosure may also be applied to a structure which replaces the communication between the access network device, core network device, or network device and the terminal with the communication between a plurality of terminals (for example, device-to-device (D2D), vehicle-to-everything (V2X), etc.). In this case, the terminal may have all or part of the functions of the access network device. In addition, terms such as "uplink" and "downlink" may also be replaced by terms corresponding to the communication between the terminals (for example, "side"). For example, uplink channel, downlink channel, etc. may be replaced by side channel, and uplink, downlink, etc. may be replaced by sidelink.

In some embodiments, the terminal may be replaced by the access network device, the core network device, or the network device. In this case, the access network device, the core network device, or the network device may have all or part of the functions of the terminal.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

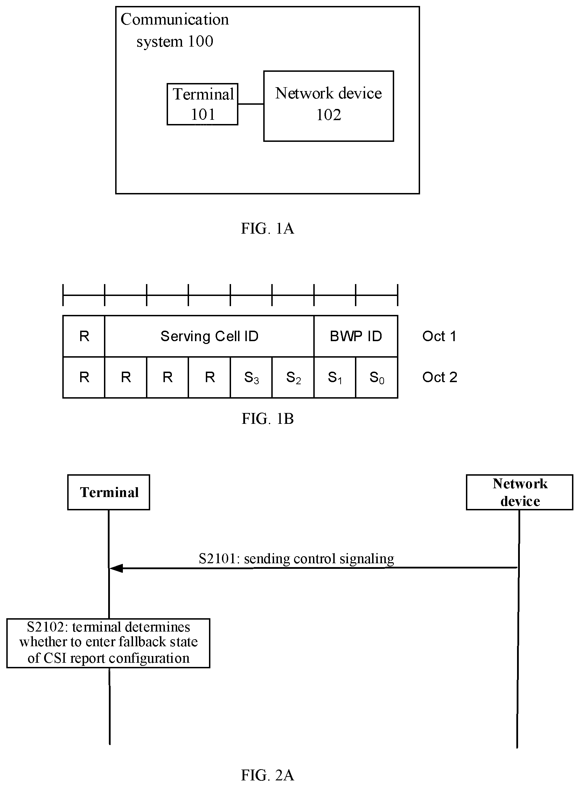

FIG. 1A is a schematic diagram showing an architecture of a communication system according to an embodiment of the present disclosure.

As shown in FIG. 1A, a communication system 100 includes a terminal 101 and a network device 102. The network device 102 may include: an access network device and a core network device.

In some embodiments, the terminal 101 may include at least one of, for example, a mobile phone, a wearable device, an Internet of Things device, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to this.

In some embodiments, the access network device may be, for example, a node or device that accesses a terminal to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solution of the present disclosure may be applied to an Open RAN architecture. In this case, interfaces between the access network devices or within the access network devices involved in the embodiments of the present disclosure may become internal interfaces of the Open RAN, and processes and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device may be a device including a first network element, etc., or may be a plurality of devices or a group of devices, each including a first network element. The network element may be virtual or physical. The core network may include, for example, at least one of an evolved packet core (EPC), a 5G core network (5GCN), and a next generation core (NGC).

In some embodiments, the first network element is, for example, an access and mobility management function (AMF).

In some embodiments, the first network element is, for example, a mobility management entity (MME).

In some embodiments, the first network element is used for access and mobility management, such as registration management, connection management, and mobility management, etc., but its name is not limited thereto.

In some embodiments, the first network element may be a network element independent of the core network device.

In some embodiments, the core network may further include a second network element, etc. The second network element may include: user data management (UDM), etc.

It may be understood that the communication system described in the embodiments of the present disclosure is for the purpose of more clearly illustrating the technical solution of the embodiments of the present disclosure, and does not constitute a limitation on the technical solution provided by the embodiments of the present disclosure. A person skilled in the art may know that with the evolution of the system architecture and the emergence of new business scenarios, the technical solution provided by the embodiments of the present disclosure is also applicable to similar technical problems.

The following embodiments of the present disclosure may be applied to the communication system 100 shown in FIG. 1A, or some entities of the communication system 100 shown in FIG. 1A, but are not limited thereto. The entities shown in FIG. 1A are examples, and the communication system may include all or part of the entities in FIG. 1A, or may include other entities other than FIG. 1A. The number and form of the entities are arbitrary, and the connection relationship between the entities is an example. The entities may be connected or disconnected, and the connection may be in any manner, which may be a direct connection or an indirect connection, and may be a wired connection or a wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments, a MAC CE for activating or deactivating semi-persistent (SP) CSI reporting is shown in FIG. 1B, and FIG. 1B is a schematic diagram of a MAC CE according to an illustrative embodiment.

A serving cell identifier (ID) indicates an ID of a serving cell to which the MAC CE is applicable, and the length of this field is 5 bits.

A bandwidth part (BWP) ID indicates an uplink BWP applied by the MAC CE, as a code point of a bandwidth part indicator field in downlink control information (DCI) as specified in TS 38.212 [9]. The length of this field is 2 bits.

Sᵢ: this field indicates an activation/deactivation state of a semi-persistent CSI report configuration in a CSI report configuration (CSI ReportConfigToAddModList), as specified in TS 38.331 [5].

S₀ refers to a CSI report configuration that includes PUCCH resources for the SP CSI report in the indicated BWP and has the smallest CSI configuration identifier (ReportConfigId) within a list whose type is set to semi-persistent based on PUCCH (semi-PersistentONPUCCH).

S₁ refers to a report configuration that includes PUCCH resources for the SP CSI report in the indicated BWP and has a second lowest CSI configuration identifier (ReportConfigId), and so on.

In a case that the number of report configurations in the list whose type is set to semi-persistent based on PUCCH (semi-PersistentONPUCCH) in the indicated BWP is less than i+1, the MAC CE shall ignore the Sᵢ field.

In a case that the Sᵢ field is set to 1, it indicates that a corresponding semi-persistent CSI report configuration should be activated. In a case that the Sᵢ field is set to 0, it indicates that the corresponding semi-persistent CSI report configuration will be deactivated.

FIG. 2A is an interactive schematic diagram showing a channel state information (CSI) report configuration activation method according to an illustrative embodiment. As shown in FIG. 2A, the embodiment of the present disclosure relates to the channel state information (CSI) report configuration activation method, which is performed by the communication system 100, and includes the following steps.

In step S2101, a network device sends a control signaling to a terminal.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the terminal receives the control signaling sent by the network device.

In some embodiments, the control signaling may be any instruction sent by the network device, such as a radio resource control (RRC) instruction, an MAC instruction and/or a DCI.

In some embodiments, in a fallback state of a CSI report configuration, the terminal performs CSI measurement reporting based on a first parameter of the CSI report configuration.

In some embodiments, the CSI report configuration may be divided into a first type of report configuration and a second type of report configuration according to whether a sub-configuration is included.

In some embodiments, the first type of report configuration may include one or more sub-configurations.

In some embodiments, the second type of report configuration does not include a sub-configuration.

In some embodiments, the first type of report configuration may include a first parameter. The first parameter may be a common parameter of multiple sub-configurations in the first type of report configuration, and the common parameter may be a CSI parameter not included in any sub-configuration, that is, a CSI parameter included in a part of the first type of report configuration different from any sub-configuration. Alternatively, the first parameter may be a parameter other than configuration parameters in the multiple sub-configurations of the first type of report configuration, for example, a default parameter.

In some embodiments, the CSI parameter may include a measurement parameter and/or a reporting parameter.

In some embodiments, the measurement parameter may be configured for CSI measurement.

In some embodiments, the reporting parameter may be configured for reporting a CSI measurement result.

In some embodiments, a sub-configuration of the CSI report configuration includes a first sub-configuration and at least one second sub-configuration; the first sub-configuration carries a first parameter; and the at least one second sub-configuration is different from the first sub-configuration.

Here, the second sub-configuration does not include the first parameter. The first parameter may be suitable for CSI measurement and reporting of various spatial domain (SD) patterns and/or power domain (PD) patterns.

The CSI parameters included in different second sub-configurations correspond to different SD patterns or PD patterns. The CSI parameters included in one second sub-configuration may be configured for CSI measurement and reporting of a specific SD pattern and/or PD pattern.

It should be noted that each first type of report configuration may include one or more second sub-configurations; and each second sub-configuration may be associated with one or more SD patterns and/or one or more PD patterns.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

For example, by ordering identifiers of the sub-configurations in the CSI report configuration in an ascending or descending sequence, the index of each sub-configuration in the CSI report configuration may be obtained.

For another example, the index of each sub-configuration in the CSI report configuration may be pre-agreed by a network device or according to a protocol.

In some embodiments, the specified position may be the first or last position of the ordered sub-configurations in the CSI report configuration.

In some other embodiments, the specified position may be any position in the CSI report configuration, such as a middle position in the CSI report configuration.

In some embodiments, the specified index may be any specified natural number. For example, a sub-configuration with index "0" in the CSI report configuration is determined as the first sub-configuration.

Of course, the above is only an example of determining the sub-configuration in the CSI report configuration, and the specific implementation is not limited to the above example.

The second sub-configuration is different from the first sub-configuration.

In some embodiments, the first parameter may also be included in the first sub-configuration in the first type of report configuration. The first sub-configuration is a special sub-configuration or a default sub-configuration. In some embodiments, the sub-configuration included in the first type of report configuration may include the first sub-configuration and the second sub-configuration. In some cases, the first sub-configuration may also be referred to as a first type of sub-configuration, and the second sub-configuration may also be referred to as a second type of sub-configuration.

In some embodiments, the control signaling is configured to instruct the terminal whether to enter a fallback state of the CSI report configuration.

In some embodiments, the fallback state of the CSI report configuration may be a state in which the CSI report configuration is activated but CSI measurement reporting is not performed according to the second sub-configuration of the CSI report configuration.

In some embodiments, the first parameter may be configured in a part of the first type of report configuration other than the sub-configuration.

In some embodiments, in a case that the terminal is not in the fallback state of the CSI report configuration and the CSI report configuration includes at least one sub-configuration that is activated, the terminal performs CSI measurement reporting based on the activated sub-configuration in the CSI report configuration.

In some embodiments, in the fallback state of the CSI report configuration, the terminal performs CSI measurement reporting based on a first parameter of the CSI report configuration.

In some embodiments, the control signaling is configured to activate or deactivate a semi-persistent channel state information (SP-CSI) report configuration or an aperiodic CSI report configuration.

In some embodiments, the network device sends the control signaling, and the terminal receives the control signaling.

In some embodiments, the control signaling may include a second indication bit. The second indication bit may indicate activation or deactivation of the sub-configuration in the CSI report configuration.

For example, the control signaling may be a MAC CE or a DCI. For another example, the control signaling carrying the second indication bit may be a first type of MAC CE and/or DCI.

In step S2102, the terminal determines whether to enter a fallback state of a CSI report configuration.

In some embodiments, the terminal determines whether to enter the fallback state of the CSI report configuration according to the control signaling.

In some embodiments, the control signaling may be used to determine activation or deactivation of the CSI report configuration, and/or to determine activation or deactivation of a sub-configuration of the CSI report configuration.

In some embodiments, in a case that an n-th CSI report configuration is activated and no sub-configuration of the n-th CSI report configuration is activated, the terminal enters a fallback state of the n-th CSI report configuration.

In some embodiments, no sub-configuration of the n-th CSI report configuration being activated may include following cases: in a case that the n-th CSI report configuration includes a first sub-configuration and a second sub-configuration, both the first sub-configuration and the second sub-configuration of the n-th CSI report configuration are not activated; or, in a case that the n-th CSI report configuration does not include a first sub-configuration, that is, when the first parameter of the n-th CSI report configuration is not included in the sub-configuration, no second sub-configuration of the n-th CSI report configuration is activated. In this case, the second sub-configuration is only intended to distinguish from the sub-configuration including the first parameter, and may actually be referred to as a sub-configuration.

In some embodiments, in a case that an n-th CSI report configuration is activated, the n-th CSI report configuration has a first parameter, the first parameter does not belong to any sub-configuration of the n-th CSI report configuration, and no sub-configuration of the n-th CSI report configuration is activated, the terminal enters a fallback state of the n-th CSI report configuration.

In some embodiments, in a case that an n-th CSI report configuration is deactivated and the control signaling instructs the terminal to perform CSI measurement according to the first parameter of the n-th CSI report configuration, the terminal enters a fallback state of the n-th CSI report configuration. In this case, the first parameter included in the n-th CSI report configuration may be a CSI parameter carried in the first sub-configuration, and may also be a common parameter included in a part of the n-th CSI report configuration other than any sub-configuration.

In some embodiments, in a case that an n-th CSI report configuration is activated and no sub-configuration of the n-th CSI report configuration is activated, the terminal enters a fallback state of the n-th CSI report configuration.

In some embodiments, in a case that an n-th CSI report configuration is activated, the n-th CSI report configuration includes a first sub-configuration and at least one second sub-configuration, the first sub-configuration of the n-th CSI report configuration is activated and no second sub-configuration of the n-th CSI report configuration is activated, the terminal enters a fallback state of the n-th CSI report configuration. In some embodiments, in a case that the control signaling indicates deactivation of a certain CSI report configuration, CSI measurement and/or reporting associated with such CSI report configuration is stopped.

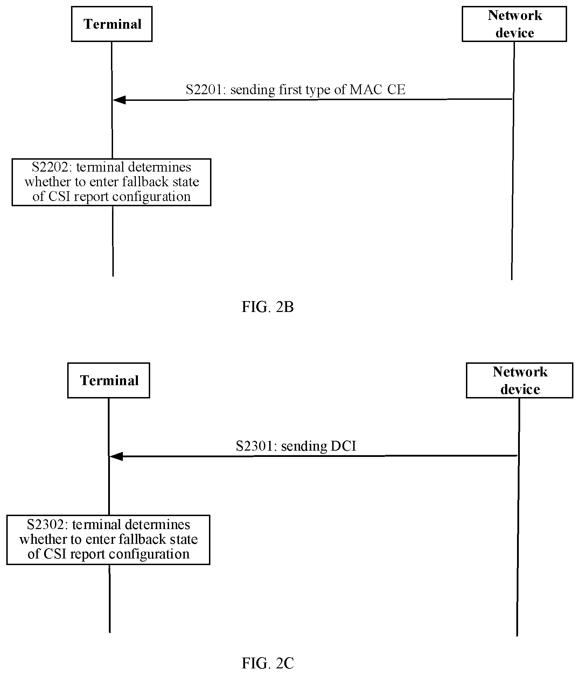

FIG. 2B is an interactive schematic diagram showing a channel state information (CSI) report configuration activation method according to an illustrative embodiment. As shown in FIG. 2B, the embodiment of the present disclosure relates to the channel state information (CSI) report configuration activation method, which is performed by the communication system 100, and includes the following steps.

In step S2201, a network device sends a first type of MAC CE to a terminal.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some examples, the first type of MAC CE may be an enhanced MAC CE.

In some embodiments, the first type of MAC CE may be a MAC CE capable of indicating activation or deactivation of a sub-configuration.

In some embodiments, the first type of MAC CE may include a first indication bit.

In some embodiments, the first indication bit may be used to activate or deactivate a sub-configuration of a CSI report configuration.

In some embodiments, a logical channel identifier of the first type of MAC CE is different from a logical channel identifier of a second type of MAC CE.

In some embodiments, the second type of MAC CE may be used for activation or deactivation of a second type of report configuration in the CSI report configuration.

In some embodiments, the second type of report configuration does not include a sub-configuration.

In some embodiments, the second type of MAC CE may be a MAC CE as shown in FIG. 1B.

In some embodiments, a sub-configuration of the CSI report configuration includes a first sub-configuration and a second sub-configuration; the first sub-configuration carries a first parameter; and the second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some embodiments, an index corresponding to the first sub-configuration is equal to 0.

In some embodiments, the CSI report configuration includes a second sub-configuration and a first parameter, and the first parameter is a CSI parameter included in a part of the CSI report configuration different from the second sub-configuration.

In some embodiments, the first type of MAC CE includes a first indication bit, and the first indication bit is used to activate or deactivate a sub-configuration in the CSI report configuration.

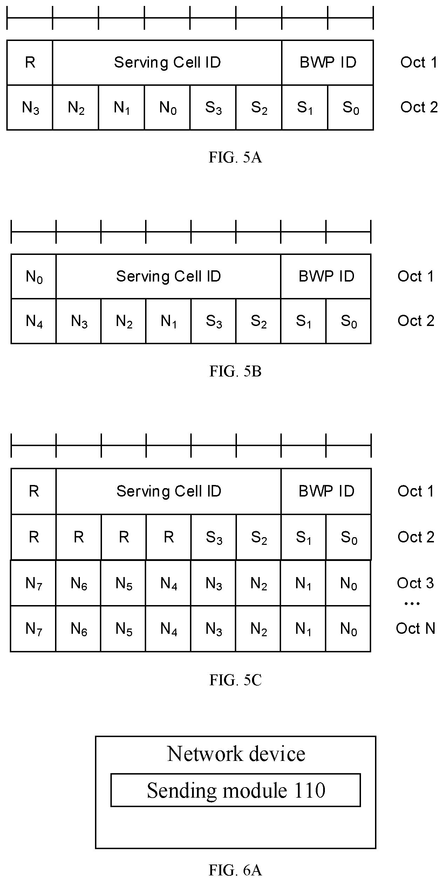

The Nᵢ bits in the first type of MAC CEs shown in FIG. 5A to FIG. 5C are all first type of indication bits.

In some embodiments, the first indication bit indicates activation or deactivation of the sub-configuration by means of a bitmap.

In some embodiments, the first indication bit indicates activation or deactivation of the sub-configuration by means of joint indication. In a case that the joint indication is adopted, a value of the first indication bit may indicate a combined state of activation or deactivation of the report configuration and/or the sub-configuration.

In some embodiments, an order of the first indication bit corresponding to the sub-configuration in the first type of MAC CE corresponds to a position index of the sub-configuration. For example, the order of the first indication bit corresponding to the sub-configuration in the first type of MAC CE corresponds to a magnitude of the position index of the sub-configuration. The first indication bit with a smaller number may correspond to a sub-configuration with a larger index, or the first indication bit with a smaller number may correspond to a sub-configuration with a smaller position index.

In some embodiments, an order of the first indication bit corresponding to the sub-configuration in the first type of MAC CE corresponds to a sub-configuration identifier. For example, the order of the first indication bit corresponding to the sub-configuration in the first type of MAC CE corresponds to a magnitude of the sub-configuration identifier of the sub-configuration. The first indication bit with a smaller number may correspond to a sub-configuration with a larger sub-configuration identifier, or the first indication bit with a smaller number may correspond to a sub-configuration with a smaller sub-configuration identifier.

In some embodiments, an order of the first indication bit corresponding to the sub-configuration in the first type of MAC CE corresponds to a configuration position of the sub-configuration in the CSI report configuration.

In some embodiments, the first type of MAC CE may further include a second indication bit.

In some embodiments, the second indication bit may be implemented using the R bit of Oct1 of the first type of MAC CE shown in FIG. 5A and/or FIG. 5C.

In another embodiment, the second indication bit may use one or more bits at any specified position in the first type of MAC CE.

In some embodiments, the second indication bit indicates whether to perform CSI measurement reporting based on the first parameter. The first parameter here may be a parameter carried in the first sub-configuration and/or a parameter carried in a part of the first type of report configuration other than the sub-configuration.

In a case that the second indication bit indicates that the CSI measurement reporting is performed based on the first parameter, the first type of MAC CE is configured to instruct the terminal to enter the fallback state of the CSI report configuration; or, in a case that the second indication bit indicates that the CSI measurement reporting is not performed based on the first parameter and the first type of MAC CE indicates activation of at least one sub-configuration in the CSI report configuration, the MAC CE is configured to instruct the terminal not to enter the fallback state of the CSI report configuration.

For example, in a case that a value of the second indication bit is 1, the second indication bit may indicate that the CSI measurement reporting is performed based on the first parameter, and in a case that the value of the second indication bit is 0, the second indication bit may indicate that the CSI measurement reporting is not performed based on the first parameter. For another example, in a case that the value of the second indication bit is 0, the second indication bit may indicate that the CSI measurement reporting is performed based on the first parameter, and in a case that the value of the second indication bit is 1, the second indication bit may indicate that the CSI measurement reporting is not performed based on the first parameter.

In some embodiments, the first type of MAC CE further includes: a third indication bit configured to activate or deactivate the CSI report configuration.

In some embodiments, the third indication bit may be the Sᵢ bit shown in FIG. 5A to FIG. 5C.

In some embodiments, the third indication bit may indicate the activation or deactivation of the CSI report configuration by means of a bitmap or joint indication. For example, in a case that the third indication bit indicates the activation or deactivation of the CSI report configuration by means of bitmap, one bit may indicate one CSI report configuration. For another example, in a case that the third indication bit indicates the activation or deactivation of the CSI report configuration by means of joint indication, a value of at least one third indication bit indicates a combined state of the activation or deactivation of the CSI report configuration.

In some embodiments, the first indication bit and the third indication bit are located in different octets of the MAC CE. For example, the first type of MAC CE and the second type of MAC CE shown in FIG. 5C are examples in which the first indication bit and the third indication bit are located in different octets.

In some other embodiments, at least part of the first indication bit and at least part of the third indication bit are located in the same octet of the MAC CE. For example, the first type of MAC CE and the second type of MAC CE shown in FIG. 5A and FIG. 5B are examples in which the first indication bit and the third indication bit are located in the same octet.

In step S2202, the terminal determines whether to enter a fallback state of a CSI report configuration.

In some embodiments, in the fallback state of the CSI report configuration, the terminal performs CSI measurement reporting based on a first parameter of the CSI report configuration.

In some embodiments, the terminal determines whether to enter the fallback state of the CSI report configuration according to the first type of MAC CE.

In a case that at least one second sub-configuration is activated and/or the first sub-configuration is activated, the terminal performs the CSI measurement reporting based on the sub-configuration of the CSI report configuration.

In some embodiments, in a case that the CSI report configuration is activated and none of the at least one sub-configuration in the CSI report configuration is activated, the fallback state of the CSI report configuration is entered.

In some embodiments, in a case that the CSI report configuration is activated and both the first sub-configuration and the second sub-configuration in the CSI report configuration are not activated, the fallback state of the CSI report configuration is entered.

In some embodiments, in a case that the CSI report configuration is activated and none of the at least one second sub-configuration in the CSI report configuration is activated, the fallback state of the CSI report configuration is entered.

In some embodiments, the first type of MAC CE may be used to determine activation or deactivation of the CSI report configuration, and to determine activation or deactivation of the sub-configuration of the CSI report configuration.

In some embodiments, for optional implementations of the first type of MAC CE, reference may be made to the optional implementations of the embodiment corresponding to FIG. 2A.

In some embodiments, the first type of MAC CE includes a first indication bit.

In some embodiments, the first indication bit is used to activate or deactivate the sub-configuration in the CSI report configuration.

In some embodiments, the first type of MAC CE further includes a second indication bit indicating whether to perform CSI measurement reporting based on the first parameter.

In some embodiments, the second indication bit may use a reserved bit of oct1 of the MAC CE shown in FIG. 1B, but the specific implementation is not limited to this embodiment.

In some embodiments, in a case that an n-th CSI report configuration is activated, and no sub-configuration of the n-th CSI report configuration is activated, the terminal enters a fallback state of the n-th CSI report configuration.

In some embodiments, in a case that an n-th CSI report configuration is activated, the n-th CSI report configuration has a first parameter, the first parameter does not belong to any sub-configuration of the CSI report configuration, and no sub-configuration of the n-th CSI report configuration is activated, the terminal enters a fallback state of the n-th CSI report configuration.

In some embodiments, in a case that an n-th CSI report configuration is activated, the n-th CSI report configuration has a first parameter, the first parameter does not belong to any sub-configuration of the CSI report configuration, and no sub-configuration of the n-th CSI report configuration is activated, the terminal enters a fallback state of the n-th CSI report configuration.

In some embodiments, in a case that an n-th CSI report configuration is deactivated and the first type of MAC CE indicates that CSI measurement is performed according to the first parameter of the n-th CSI report configuration, the terminal enters a fallback state of the n-th CSI report configuration. In this case, the first parameter included in the n-th CSI report configuration may be a CSI parameter carried in the first sub-configuration, and may also be a common parameter or a default parameter included in a part of the n-th CSI report configuration other than any sub-configuration.

In some embodiments, in a case that an n-th CSI report configuration is activated, and no sub-configuration of the n-th CSI report configuration is activated, the terminal enters a fallback state of the n-th CSI report configuration.

In some embodiments, in a case that an n-th CSI report configuration is activated, the n-th CSI report configuration includes a first sub-configuration and at least one second sub-configuration, the first sub-configuration of the n-th CSI report configuration is activated and no second sub-configuration of the n-th CSI report configuration is activated, the terminal enters a fallback state of the n-th CSI report configuration.

In some embodiments, in a case that the first type of MAC CE indicates deactivation of a certain CSI report configuration, CSI measurement and/or reporting associated with such CSI report configuration is stopped.

FIG. 2C is an interactive schematic diagram showing a channel state information (CSI) report configuration activation method according to an illustrative embodiment. As shown in FIG. 2C, the embodiment of the present disclosure relates to the channel state information (CSI) report configuration activation method, which is performed by the communication system 100, and includes the following steps.

In step S2301, a network device sends DCI to a terminal.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the DCI includes a first indication field.

In some embodiments, the first indication field indicates a trigger state, and the trigger state corresponds to an activation state combination of a CSI report configuration.

In some embodiments, the first indication field may be a CSI request field.

In some embodiments, a sub-configuration of a CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, the CSI report configuration includes at least one second sub-configuration and a first parameter, and the first parameter is a CSI parameter included in a part of the CSI report configuration different from the at least one second sub-configuration.

In some embodiments, in a case that the first indication field corresponds to a case that at least one CSI report configuration is activated and none of sub-configurations of the activated at least one CSI report configuration is activated, the DCI instructs the terminal to enter a fallback state of the CSI report configuration.

In some embodiments, in a case that the first indication field corresponds to a case that at least one CSI report configuration is activated and at least one sub-configuration of the activated at least one CSI report configuration is activated, the DCI instructs the terminal not to enter a fallback state of the CSI report configuration.

In some embodiments, in a case that the first indication field corresponds to a case that at least one CSI report configuration is activated and no sub-configuration of the activated at least one CSI report configuration is activated, the DCI instructs the terminal to enter a fallback state of the CSI report configuration.

In some embodiments, in a case that the first indication field corresponds to a case that at least one CSI report configuration is activated and the activated at least one CSI report configuration has an activated sub-configuration, the DCI instructs the terminal not to enter a fallback state of the CSI report configuration.

In some embodiments, the DCI includes a second indication field.

In some embodiments, the second indication field is configured to instruct the terminal to enter a fallback state of the CSI report configuration, in a case that the first indication field corresponds to a case that at least one CSI report configuration is activated and any sub-configuration of the activated at least one CSI report configuration is not activated.

In some embodiments, the second indication field is configured to instruct the terminal not to perform CSI measurement reporting, in a case that the first indication field corresponds to a case that at least one CSI report configuration is activated and any sub-configuration of the activated at least one CSI report configuration is not activated.

In some embodiments, the second indication field does not activate any sub-configuration of the activated CSI report configuration, and the terminal is instructed to enter a fallback state of the CSI report configuration; or, the second indication field does not activate any second sub-configuration of the activated CSI report configuration, and the terminal is instructed to enter a fallback state of the CSI report configuration; or, the second indication field does not activate any sub-configuration of the activated CSI report configuration, and the terminal is instructed to enter a fallback state of the CSI report configuration; or, the second indication field only activates the first sub-configuration of the activated CSI report configuration, and the terminal is instructed to enter a fallback state of the CSI report configuration; otherwise, the fallback state of the corresponding CSI report configuration is not entered. At this time, the activation of the CSI report configuration may be implemented by the first indication field of the DCI, or by the MAC CE. The MAC CE may be a second type of MAC CE. The second type of MAC CE may be configured to activate or deactivate the CSI report configuration, rather than to activate or deactivate the sub-configuration.

In some embodiments, the second indication field may be a newly added field of the DCI or a reserved field formed by reserved bits of the DCI.

In step S2302, the terminal determines whether to enter a fallback state of a CSI report configuration according to the DCI.

In some embodiments, the terminal determines whether to enter the fallback state of a corresponding CSI report configuration according to a first indication field of the DCI.

In some embodiments, the terminal determines whether to enter the fallback state of a corresponding CSI report configuration according to a second indication field of the DCI.

In some embodiments, the terminal may also determine whether not to perform CSI measurement reporting of a corresponding CSI report configuration according to the DCI.

In some embodiments, in the fallback state of the CSI report configuration, the terminal performs CSI measurement reporting based on a first parameter of the CSI report configuration.

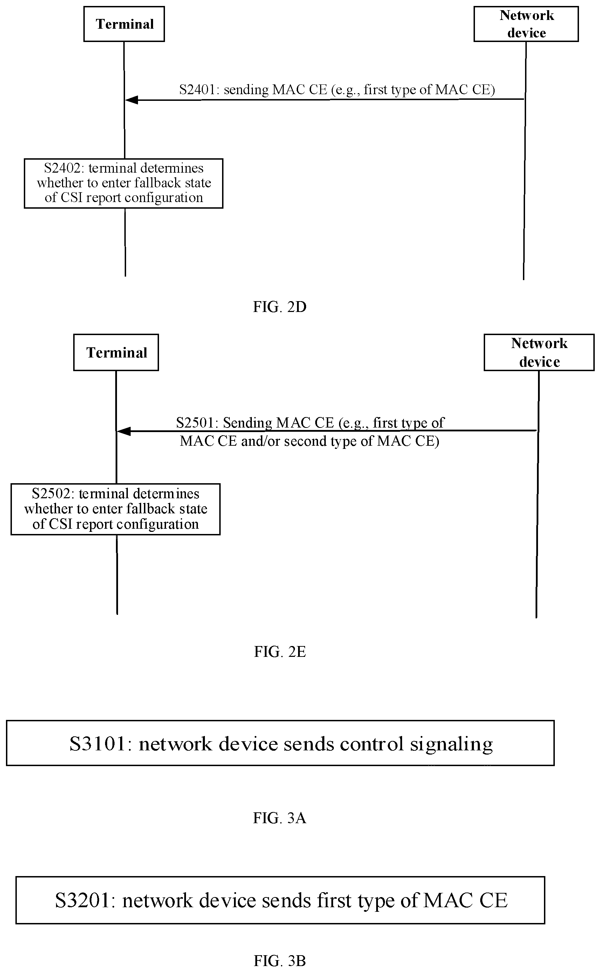

FIG. 2D is an interactive schematic diagram showing a channel state information (CSI) report configuration activation method according to an illustrative embodiment. As shown in FIG. 2D, the embodiment of the present disclosure relates to the channel state information (CSI) report configuration activation method, which is performed by the communication system 100, and includes the following steps.

In step S2401, a network device sends a MAC CE to a terminal.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the MAC CE may include a first type of MAC CE and/or a second type of MAC CE.

In some embodiments, the first type of MAC CE may be an enhanced MAC CE.

In some embodiments, the second type of MAC CE may be a legacy MAC CE.

In some embodiments, the first type of MAC CE may be used to activate or deactivate a sub-configuration in the CSI report configuration.

In some embodiments, the second type of MAC CE may be used for activation or deactivation of the CSI report configuration.

In some embodiments, the network device may send the first type of MAC CE, and may not send the second type of MAC CE.

In some other embodiments, the network device may send both the first type of MAC CE and the second type of MAC CE.

In some other embodiments, the network device may send the second type of MAC CE, and may not send the first type of MAC CE.

In some embodiments, the first type of MAC CE is only used to indicate activation or deactivation of a first type of report configuration.

In some embodiments, the first type of MAC CE may be used to indicate activation or deactivation of a first type of report configuration and a second type of report configuration.

In some embodiments, the second type of MAC CE is used only to indicate activation or deactivation of a second type of report configuration.

In some embodiments, the second type of MAC CE may be used to indicate activation or deactivation of a first type of report configuration and a second type of report configuration.

In step S2402, the terminal determines whether to enter a fallback state of a CSI report configuration according to a first type of MAC CE.

In some embodiments, in the fallback state of the CSI report configuration, the terminal performs CSI measurement reporting based on a first parameter of the CSI report configuration.

In some embodiments, the terminal determines whether to perform CSI measurement reporting of the CSI report configuration according to the first type of MAC CE.

In some embodiments, in case of receiving the first type of MAC CE, the terminal may refuse to receive a second type of MAC CE, stop receiving a second type of MAC CE, refuse to parse a second type of MAC CE, ignore a second type of MAC CE, or discard a second type of MAC CE. At this time, the terminal determines whether to enter the fallback state of the CSI report configuration based solely on the first type of MAC CE.

In some embodiments, in case of receiving the first type of MAC CE, the terminal may refuse to receive a second type of MAC CE, stop receiving a second type of MAC CE, refuse to parse a second type of MAC CE, ignore a second type of MAC CE, or discard a second type of MAC CE. At this time, the terminal may determine whether to perform the CSI measurement reporting of the CSI report configuration based solely on the first type of MAC CE.

For example, in a case that the first type of MAC CE indicates deactivation of the CSI report configuration, the terminal does not perform CSI measurement reporting of the deactivated CSI report configuration.

For another example, in a case that the first type of MAC CE indicates activation of the CSI report configuration, the terminal performs CSI measurement reporting of the activated CSI report configuration.

In some embodiments, performing the CSI measurement reporting of the activated CSI report configuration may include: CSI report measurement based on a sub-configuration of the CSI report configuration; and/or, CSI report measurement based on a first parameter of the CSI report configuration.

FIG. 2E is an interactive schematic diagram showing a channel state information (CSI) report configuration activation method according to an illustrative embodiment. As shown in FIG. 2E, the embodiment of the present disclosure relates to the channel state information (CSI) report configuration activation method, which is performed by the communication system 100, and includes the following steps.

In step S2501, a network device sends a MAC CE to a terminal.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the MAC CE may include a first type of MAC CE and a second type of MAC CE.

In some embodiments, the first type of MAC CE may be an enhanced MAC CE.

In some embodiments, the second type of MAC CE may be a legacy MAC CE.

In some embodiments, the first type of MAC CE may be used to activate or deactivate a sub-configuration in a CSI report configuration.

In some embodiments, the second type of MAC CE may be used for activation or deactivation of a CSI report configuration.

In some embodiments, the network device may send the first type of MAC CE, and may not send the second type of MAC CE.

In some other embodiments, the network device may send both the first type of MAC CE and the second type of MAC CE.

In some embodiments, the MAC CE sent by the network device is configured for activation or deactivation of a CSI report configuration and/or a sub-configuration in a CSI report configuration.

In some embodiments, the MAC CE sent by the network device is also configured for the terminal to determine whether to enter a fallback state of a corresponding CSI report configuration.

In some embodiments, a sub-configuration of a CSI report configuration includes a first sub-configuration and a second sub-configuration; the first sub-configuration carries a first parameter; and the second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, a CSI report configuration includes a second sub-configuration and a first parameter, and the first parameter is a CSI parameter included in a part of the CSI report configuration different from the at least one second sub-configuration.

In step S2502, the terminal determines whether to enter a fallback state of a CSI report configuration according to a first type of MAC CE and/or a second type of MAC CE.

In some embodiments, in the fallback state of the CSI report configuration, the terminal performs CSI measurement reporting based on a first parameter of the CSI report configuration.

In some embodiments, the terminal receives the second type of MAC CE after receiving the first type of MAC CE. In this case, the terminal determines to enter the fallback state of CSI report configuration according to the first type of MAC CE and the second type of MAC CE.

In some embodiments, the terminal receives the second type of MAC CE before receiving the first type of MAC CE. In this case, the terminal may determine whether to enter the fallback state of the CSI report configuration according to the second type of MAC CE.

In some embodiments, the terminal receives the second type of MAC CE before receiving the first type of MAC CE. In this case, the second type of MAC CE may also be ignored.

In some other embodiments, the terminal receives the first type of MAC CE after receiving the second type of MAC CE. In this case, it is determined whether the terminal enters the fallback state of the CSI report configuration according to the first type of MAC CE.

In some embodiments, in the case that the second type of MAC CE is received after the first type of MAC CE is received, whether the terminal enters the fallback state of the CSI report configuration may be discussed in the following situations.

In some embodiments, in a case that the first type of MAC CE activates an x-th CSI report configuration, activating or deactivating the CSI report configuration according to the second type of MAC CE includes at least one of the following situations: in a case that the second type of MAC CE indicates activation of the x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of the x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of the x-th CSI report configuration, and activation of a sub-configuration of the x-th CSI report configuration.

In some embodiments, in a case that the first type of MAC CE activates an x-th CSI report configuration, activating or deactivating the CSI report configuration according to the second type of MAC CE includes at least one of the following situations: in a case that the second type of MAC CE indicates activation of the x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of the x-th CSI report configuration, the first type of MAC CE and the second type of MAC CE are configured to maintain activation of an activated sub-configuration of the x-th CSI report configuration and instruct the terminal not to enter the fallback state of the CSI report configuration; or, in a case that the second type of MAC CE indicates activation of a y-th CSI report configuration, the first type of MAC CE and the second type of MAC CE are configured to maintain deactivation of a second sub-configuration of the y-th CSI report configuration, activation of an x-th CSI report configuration, and activation of a sub-configuration of the x-th CSI report configuration, and instruct the terminal not to enter the fallback state of the CSI report configuration.

In some other embodiments, the terminal receives the second type of MAC CE before receiving the first type of MAC CE, and the terminal determines whether to enter the fallback state of the CSI report configuration according to the second type of MAC CE, which may include but is not limited to at least one of the following situations: in a case that the second type of MAC CE indicates activation of an n-th CSI report configuration, the second type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the second type of MAC CE is configured to instruct the terminal to enter a fallback state of the n-th CSI report configuration.

In some embodiments, n may be 0 or a positive integer.

In some embodiments, the above method may include the methods of the above embodiments on the communication system side, terminal side, network device side, etc., which will not be repeated here.

As shown in FIG. 3A, an embodiment of the present disclosure provides an information processing method, which is performed by a network device, and may include the following steps.

In step S3101, a control signaling is sent.

In some embodiments, the network device may include but is not limited to an access network device.

In some embodiments, a terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the control signaling may be any instruction sent by the network device, such as an RRC instruction, an MAC instruction and/or a DCI.

In some embodiments, the control signaling is configured for the terminal to determine whether to enter a fallback state of a CSI report configuration.

In some embodiments, the CSI report configuration may be divided into a first type of report configuration and a second type of report configuration according to whether a sub-configuration is included.

In some embodiments, the first type of report configuration may include one or more sub-configurations.

In some embodiments, the second type of report configuration does not include a sub-configuration.

In some embodiments, the first type of report configuration may include a first parameter. The first parameter may be a common parameter of multiple sub-configurations in the first type of report configuration, and the common parameter may be a CSI parameter not included in any sub-configuration, that is, a CSI parameter included in a part of the first type of report configuration different from any sub-configuration.

In some embodiments, the CSI parameter may include a measurement parameter and/or a reporting parameter.

In some embodiments, the measurement parameter may be configured for CSI measurement.

In some embodiments, the reporting parameter may be configured for reporting a CSI measurement result.

In some embodiments, a sub-configuration of the CSI report configuration includes a first sub-configuration and at least one second sub-configuration; the first sub-configuration carries a first parameter; and the at least one second sub-configuration is different from the first sub-configuration.

Here, the at least one second sub-configuration does not include the first parameter. The first parameter is applicable to CSI measurement and reporting of various spatial domain (SD) patterns and/or power domain (PD) patterns.

CSI parameters included in different second sub-configurations correspond to different SD patterns or PD patterns. The CSI parameters included in one second sub-configuration may be used for CSI measurement and reporting of a specific SD pattern and/or PD pattern.

It should be noted that each first type of report configuration may include one or more second sub-configurations; and each second sub-configuration may be associated with one or more SD patterns and/or one or more PD patterns.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

For example, by ordering identifiers of the sub-configurations in the CSI report configuration in an ascending or descending sequence, the index of each sub-configuration in the CSI report configuration may be obtained.

For another example, the index of each sub-configuration in the CSI report configuration may be pre-agreed by a network device or according to a protocol.

In some embodiments, the specified position may be the first or last position in the CSI report configuration.

In some other embodiments, the specified position may be any position in the CSI report configuration, such as a middle position in the CSI report configuration.

In some embodiments, the specified index may be any specified natural number. For example, a sub-configuration with index "0" in the CSI report configuration is determined as the first sub-configuration.

Of course, the above is only an example of determining the sub-configuration in the CSI report configuration, and the specific implementation is not limited to the above example.

In some other embodiments, all sub-configurations other than the first sub-configuration in the CSI report configuration are the second sub-configurations.

In some embodiments, the first parameter may also be included in the first sub-configuration in the first type of report configuration. The first sub-configuration is a special sub-configuration or a default sub-configuration. In some embodiments, the sub-configuration included in the first type of report configuration may include the first sub-configuration and the second sub-configuration. In some cases, the first sub-configuration may also be referred to as a first type of sub-configuration, and the second sub-configuration may also be referred to as a second type of sub-configuration.

In some embodiments, the control signaling is configured to instruct the terminal whether to enter a fallback state of the CSI report configuration.

In some embodiments, the fallback state of the CSI report configuration may be a state in which the CSI report configuration is activated but CSI measurement reporting is not performed according to the second sub-configuration of the CSI report configuration.

In some embodiments, in a case that the terminal is not in the fallback state of the CSI report configuration and the CSI report configuration includes at least one second sub-configuration that is activated, the terminal performs CSI measurement reporting based on the sub-configuration of the CSI report configuration.

In some embodiments, in a case that the terminal is not in the fallback state of the CSI report configuration and the CSI report configuration includes at least one second sub-configuration that is activated, the terminal performs CSI measurement reporting based on the activated sub-configuration in the CSI report configuration.

In some embodiments, in the fallback state of the CSI report configuration, the terminal performs CSI measurement reporting based on the first parameter of the CSI report configuration.

In some embodiments, the control signaling is configured to activate or deactivate a semi-persistent channel state information (SP-CSI) report configuration or an aperiodic CSI report configuration.

In some embodiments, the network device sends the control signaling, and the terminal receives the control signaling.

As shown in FIG. 3B, an embodiment of the present disclosure provides an information processing method, which is performed by a network device, and may include the following steps.

In step S3201, the network device sends a first type of MAC CE.

In some embodiments, a sub-configuration of a CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some embodiments, the CSI report configuration includes at least one second sub-configuration and a first parameter, and the first parameter is a CSI parameter included in a part of the CSI report configuration different from the at least one second sub-configuration.

In some embodiments, the first type of MAC CE may further include a second indication bit.

In some embodiments, the first type of MAC CE may include a second indication bit.

In some embodiments, the second indication bit indicates whether to perform CSI measurement reporting based on the first parameter. The first parameter here may be a parameter carried in the first sub-configuration and/or a parameter carried in a part of the first type of report configuration other than the sub-configuration.

In a case that the second indication bit indicates that the CSI measurement reporting is performed based on the first parameter, the first type of MAC CE is configured to instruct the terminal to enter a fallback state of the CSI report configuration; or, in a case that the second indication bit indicates that the CSI measurement reporting is not performed based on the first parameter and the first type of MAC CE indicates activation of at least one sub-configuration in the CSI report configuration, the MAC CE is configured to instruct the terminal not to enter a fallback state of the CSI report configuration.

In some embodiments, the first type of MAC CE further includes: a third indication bit configured to activate or deactivate the CSI report configuration.

In some embodiments, the first indication bit and the third indication bit are located in different octets of the MAC CE.

In some other embodiments, at least part of the first indication bit and at least part of the third indication bit are located in the same octet of the MAC CE.

In some embodiments, the MAC CE by which the network device activates the CSI report configuration and/or the sub-configuration may include only the first type of MAC CE.

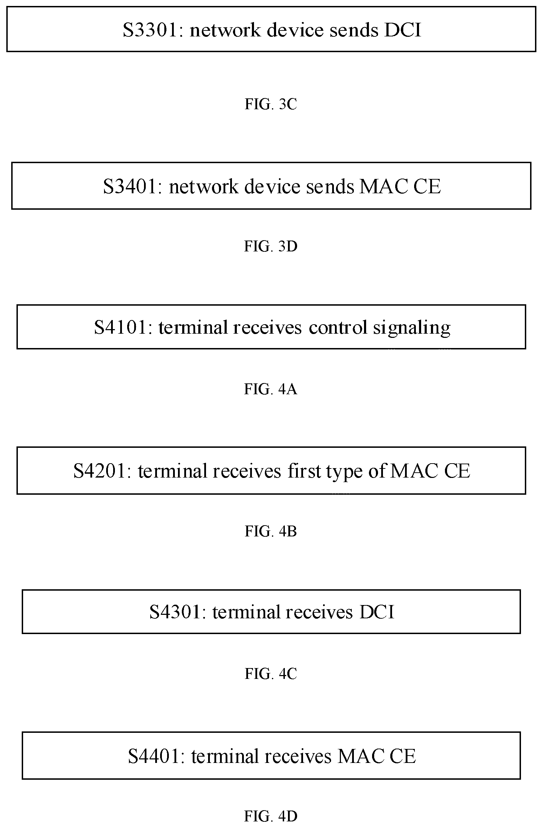

As shown in FIG. 3C, an embodiment of the present disclosure provides an information processing method, which is performed by a network device, and may include the following steps.

In step S3301, the network device sends DCI.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the DCI includes a first indication field.

In some embodiments, the first indication field indicates a trigger state, and the trigger state corresponds to an activation state combination of a CSI report configuration.

In some embodiments, the first indication may be a CSI request field.

In some embodiments, a sub-configuration of the CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, the CSI report configuration includes at least one second sub-configuration and a first parameter, and the first parameter is a CSI parameter included in a part of the CSI report configuration different from the at least one second sub-configuration.

In some embodiments, in a case that the first indication field corresponds to a case that at least one CSI report configuration is activated and none of sub-configurations of the activated at least one CSI report configuration is activated, the DCI instructs the terminal to enter a fallback state of the CSI report configuration.

In some embodiments, in a case that the first indication field corresponds to a case that at least one CSI report configuration is activated and at least one sub-configuration of the activated at least one CSI report configuration is activated, the DCI instructs the terminal not to enter a fallback state of the CSI report configuration.

In some embodiments, in a case that the first indication field corresponds to a case that at least one CSI report configuration is activated and no sub-configuration of the activated at least one CSI report configuration is activated, the DCI instructs the terminal to enter a fallback state of the CSI report configuration.

In some embodiments, in a case that the first indication field corresponds to a case that at least one CSI report configuration is activated and the activated at least one CSI report configuration has an activated sub-configuration, the DCI instructs the terminal not to enter a fallback state of the CSI report configuration.

In some embodiments, the DCI includes a second indication field.

In some embodiments, the second indication field is configured to instruct the terminal to enter a fallback state of the CSI report configuration, in a case that the first indication field corresponds to a case that at least one CSI report configuration is activated and any sub-configuration of the activated at least one CSI report configuration is not activated.

In some embodiments, the second indication field is configured to instruct the terminal not to perform CSI measurement reporting, in a case that the first indication field corresponds to a case that at least one CSI report configuration is activated and any sub-configuration of the activated at least one CSI report configuration is not activated.

In some embodiments, the second indication field does not activate any sub-configuration of the activated CSI report configuration, and the terminal is instructed to enter a fallback state of the CSI report configuration; or, the second indication field does not activate any second sub-configuration of the activated CSI report configuration, and the terminal is instructed to enter a fallback state of the CSI report configuration; or, the second indication field does not activate any sub-configuration of the activated CSI report configuration, and the terminal is instructed to enter a fallback state of the CSI report configuration; or, the second indication field only activates the first sub-configuration of the activated CSI report configuration, and the terminal is instructed to enter a fallback state of the CSI report configuration; otherwise, the fallback state of the corresponding CSI report configuration is not entered. At this time, the activation of the CSI report configuration may be implemented by the first indication field of the DCI, or by the MAC CE. The MAC CE may be a second type of MAC CE. The second type of MAC CE may be configured to activate or deactivate the CSI report configuration, rather than to activate or deactivate the sub-configuration.

In some embodiments, in the fallback state of the CSI report configuration, the terminal performs CSI measurement reporting based on a first parameter of the CSI report configuration.

In some embodiments, the second indication field may be a newly added field of the DCI or a reserved field formed by reserved bits of the DCI.

As shown in FIG. 3D, an embodiment of the present disclosure provides an information processing method, which is performed by a network device, and may include the following steps.

In step S3401, the network device sends a MAC CE.

In some embodiments, the network device may include but is not limited to an access network device.

In some embodiments, the network device sends the MAC CE to a terminal.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the MAC CE sent by the network device is configured for activation or deactivation of a CSI report configuration and/or a sub-configuration in a CSI report configuration.

In some embodiments, the MAC CE sent by the network device is also configured for the terminal to determine whether to enter a fallback state of a corresponding CSI report configuration.

In some embodiments, a sub-configuration of the CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, the CSI report configuration includes at least one second sub-configuration and a first parameter, and the first parameter is a CSI parameter included in a part of the CSI report configuration different from the at least one second sub-configuration.

In some embodiments, the network device sends a second type of MAC CE after sending a first type of MAC CE. In this case, the first type of MAC CE and the second type of MAC CE are configured together for the terminal to determine to enter a fallback state of the CSI report configuration.

In some embodiments, the network device sends a second type of MAC CE before sending a first type of MAC CE. In this case, the second type of MAC CE may be configured for the terminal to determine whether to enter a fallback state of the CSI report configuration.

In some embodiments, the network device sends a second type of MAC CE before sending a first type of MAC CE. In this case, the second type of MAC CE sent by the network device may be ignored by the terminal.

In some other embodiments, the network device sends a first type of MAC CE after sending a second type of MAC CE. In this case, the first type of MAC CE is configured for the terminal to determine whether to enter a fallback state of the CSI report configuration.

In some embodiments, the case, in which the network device sends the second type of MAC CE after sending the first type of MAC CE, may include at least one of the following situations: in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration and instruct the terminal not to enter a fallback state of the CSI report configuration; or, in a case that the second type of MAC CE indicates activation of a y-th CSI report configuration, the first type of MAC CE and the second type of MAC CE are configured to maintain deactivation of a second sub-configuration of the y-th CSI report configuration, activation of an x-th CSI report configuration, and activation of a sub-configuration of the x-th CSI report configuration, and instruct the terminal not to enter a fallback state of the CSI report configuration. At this time, since the first type of MAC CE sent earlier indicates activation of the x-th CSI report configuration, and the y-th CSI report configuration is different from the x-th CSI report configuration, it is equivalent to that the first type of MAC CE received earlier by the terminal does not activate the y-th CSI report configuration. In this way, the terminal maintains the deactivation of the y-th CSI report configuration after receiving the second type of MAC CE.

In some other embodiments, the case, in which the network device sends the second type of MAC CE before sending the first type of MAC CE, and the second type of MAC CE is configured for the terminal to determine whether to enter the fallback state of the CSI report configuration, may include but is not limited to at least one of the following situations: in a case that the second type of MAC CE indicates activation of an n-th CSI report configuration, the second type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the second type of MAC CE is configured to instruct the terminal to enter a fallback state of the n-th CSI report configuration.

In some embodiments, in the fallback state of the CSI report configuration, the terminal performs CSI measurement reporting based on a first parameter of the CSI report configuration.

In some embodiments, n may be 0 or a positive integer.

As shown in FIG. 4A, an embodiment of the present disclosure provides an information processing method, which is performed by a terminal, and may include the following steps.

In step S4101, the terminal receives a control signaling.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the control signaling may be any instruction sent by the network device, such as an RRC instruction, an MAC instruction and/or a DCI.

In some embodiments, a CSI report configuration may be divided into a first type of report configuration and a second type of report configuration according to whether a sub-configuration is included.

In some embodiments, the first type of report configuration may include one or more sub-configurations.

In some embodiments, the second type of report configuration does not include a sub-configuration.

In some embodiments, the first type of report configuration may include a first parameter. The first parameter may be a common parameter or a default parameter of multiple sub-configurations in the first type of report configuration.

In some embodiments, a CSI parameter may include a measurement parameter and/or a reporting parameter.

In some embodiments, the measurement parameter may be configured for CSI measurement.

In some embodiments, the reporting parameter may be configured for reporting a CSI measurement result.

In some embodiments, a sub-configuration of the CSI report configuration includes a first sub-configuration and at least one second sub-configuration; the first sub-configuration carries a first parameter; and the at least one second sub-configuration is different from the first sub-configuration.

Here, the at least one second sub-configuration does not include the first parameter. The first parameter is applicable to CSI measurement and reporting of various spatial domain (SD) patterns and/or power domain (PD) patterns.

The CSI parameters included in different second sub-configurations correspond to different SD patterns or PD patterns. The CSI parameters included in one second sub-configuration may be configured for CSI measurement and reporting of a specific SD pattern and/or PD pattern.

It should be noted that each first type of report configuration may include one or more second sub-configurations; and each second sub-configuration may be associated with one or more SD patterns and/or one or more PD patterns.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some embodiments, an index corresponding to the first sub-configuration is equal to 0.

For example, by ordering identifiers of the sub-configurations in the CSI report configuration in an ascending or descending sequence, the index of each sub-configuration in the CSI report configuration may be obtained.

For another example, the index of each sub-configuration in the CSI report configuration may be pre-agreed by a network device or according to a protocol.

In some embodiments, the specified position may be the first or last position in the CSI report configuration.

In some other embodiments, the specified position may be any position in the CSI report configuration, such as a middle position in the CSI report configuration.

In some embodiments, the specified index may be any specified natural number. For example, a sub-configuration with index "0" in the CSI report configuration is determined as the first sub-configuration.

Of course, the above is only an example of determining the sub-configuration in the CSI report configuration, and the specific implementation is not limited to the above example.

In some other embodiments, all sub-configurations other than the first sub-configuration in the CSI report configuration are the second sub-configurations.

In some embodiments, the first parameter may also be included in the first sub-configuration in the first type of report configuration. The first sub-configuration is a special sub-configuration or a default sub-configuration.

In some embodiments, the sub-configuration included in the first type of report configuration may include the first sub-configuration and the second sub-configuration. In some cases, the first sub-configuration may also be referred to as a first type of sub-configuration, and the second sub-configuration may also be referred to as a second type of sub-configuration.

In some embodiments, the control signaling is configured to instruct the terminal whether to enter a fallback state of the CSI report configuration.

In some embodiments, the fallback state of the CSI report configuration may be a state in which the CSI report configuration is activated but CSI measurement reporting is not performed according to the second sub-configuration of the CSI report configuration.

In some embodiments, in a case that the at least one second sub-configuration is activated and/or the first sub-configuration is activated, the terminal performs CSI measurement reporting based on the sub-configuration of the CSI report configuration.

In some embodiments, in the fallback state of the CSI report configuration, the terminal performs the CSI measurement reporting based on the first parameter of the CSI report configuration.

In some embodiments, in the fallback state of the CSI report configuration, the terminal performs the CSI measurement reporting based on the first parameter of the CSI report configuration.

In some embodiments, the control signaling is configured to activate or deactivate a semi-persistent channel state information (SP-CSI) report configuration or an aperiodic CSI report configuration.

In some embodiments, the network device sends the control signaling, and the terminal receives the control signaling.

As shown in FIG. 4B, an embodiment of the present disclosure provides an information processing method, which is performed by a terminal, and may include the following steps.

In step S4201, the terminal receives a first type of MAC CE.

In some embodiments, the terminal receives the first type of MAC CE sent by a network device.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the first type of MAC CE is configured for activation or deactivation of a CSI report configuration and/or a sub-configuration in a CSI report configuration.

In this case, the MAC CE configured for the network device to activate the CSI report configuration and/or the sub-configuration may include only the first type of MAC CE.

In some embodiments, a sub-configuration of the CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, the CSI report configuration includes at least one second sub-configuration and a first parameter, and the first parameter is a CSI parameter included in a part of the CSI report configuration different from the at least one second sub-configuration.

In some embodiments, the network device sends a second type of MAC CE after sending the first type of MAC CE. In this case, the first type of MAC CE and the second type of MAC CE are configured together for the terminal to determine to enter a fallback state of the CSI report configuration.

In some embodiments, the network device sends a second type of MAC CE before sending the first type of MAC CE. In this case, the second type of MAC CE may be configured for the terminal to determine whether to enter a fallback state of the CSI report configuration.

In some embodiments, the network device sends a second type of MAC CE before sending the first type of MAC CE. In this case, the second type of MAC CE sent by the network device may be ignored by the terminal.

In some other embodiments, the network device sends the first type of MAC CE after sending a second type of MAC CE. In this case, the first type of MAC CE is configured for the terminal to determine whether to enter a fallback state of the CSI report configuration.

In some embodiments, the case, in which the network device sends the second type of MAC CE after sending the first type of MAC CE, may include at least one of the following situations: in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration and instruct the terminal not to enter a fallback state of the CSI report configuration; or, in a case that the second type of MAC CE indicates activation of a y-th CSI report configuration, the first type of MAC CE and the second type of MAC CE are configured to maintain deactivation of a second sub-configuration of the y-th CSI report configuration, activation of an x-th CSI report configuration, and activation of a sub-configuration of the x-th CSI report configuration, and instruct the terminal not to enter a fallback state of the CSI report configuration.

In some other embodiments, the case, in which the network device sends the second type of MAC CE before sending the first type of MAC CE, and the second type of MAC CE is configured for the terminal to determine whether to enter the fallback state of the CSI report configuration, may include but is not limited to at least one of the following situations: in a case that the second type of MAC CE indicates activation of an n-th CSI report configuration, the second type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the second type of MAC CE is configured to instruct the terminal to enter a fallback state of the n-th CSI report configuration.

In some embodiments, n may be 0 or a positive integer.

In some embodiments, the terminal determines whether to enter a fallback state of the CSI report configuration according to the first type of MAC CE.

In some embodiments, the terminal determines not to perform CSI measurement reporting related to the CSI report configuration according to the first type of MAC CE.

As shown in FIG. 4C, an embodiment of the present disclosure provides an information processing method, which is performed by a terminal, and may include the following steps.

In step S4301, the terminal receives DCI.

In some embodiments, the terminal receives the DCI sent by a network device.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the DCI includes a first indication field.

In some embodiments, the first indication field indicates a trigger state, and the trigger state corresponds to an activation state combination of a CSI report configuration.

In some embodiments, the first indication may be a CSI request field.

In some embodiments, a sub-configuration of the CSI report configuration includes a first sub-configuration and a second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, the CSI report configuration includes at least one second sub-configuration and a first parameter, and the first parameter is a CSI parameter included in a part of the CSI report configuration different from the at least one second sub-configuration.

In some embodiments, in a case that the first indication field corresponds to a case that at least one CSI report configuration is activated and none of sub-configurations of the activated at least one CSI report configuration is activated, the DCI instructs the terminal to enter a fallback state of the CSI report configuration.

In some embodiments, in a case that the first indication field corresponds to a case that at least one CSI report configuration is activated and at least one sub-configuration of the activated at least one CSI report configuration is activated, the DCI instructs the terminal not to enter a fallback state of the CSI report configuration.

In some embodiments, in a case that the first indication field corresponds to a case that at least one CSI report configuration is activated and no sub-configuration of the activated at least one CSI report configuration is activated, the DCI instructs the terminal to enter a fallback state of the CSI report configuration.

In some embodiments, in a case that the first indication field corresponds to a case that at least one CSI report configuration is activated and the activated at least one CSI report configuration has an activated sub-configuration, the DCI instructs the terminal not to enter a fallback state of the CSI report configuration.

In some embodiments, the DCI includes a second indication field.

In some embodiments, the second indication field is configured to instruct the terminal to enter a fallback state of the CSI report configuration, in a case that the first indication field corresponds to a case that at least one CSI report configuration is activated and any sub-configuration of the activated at least one CSI report configuration is not activated.

In some embodiments, the second indication field is configured to instruct the terminal not to perform CSI measurement reporting, in a case that the first indication field corresponds to a case that at least one CSI report configuration is activated and any sub-configuration of the activated at least one CSI report configuration is not activated.

In some embodiments, the second indication field does not activate any sub-configuration of the activated CSI report configuration, and the terminal is instructed to enter a fallback state of the CSI report configuration; or, the second indication field does not activate any second sub-configuration of the activated CSI report configuration, and the terminal is instructed to enter a fallback state of the CSI report configuration; or, the second indication field does not activate any sub-configuration of the activated CSI report configuration, and the terminal is instructed to enter a fallback state of the CSI report configuration; or, the second indication field only activates the first sub-configuration of the activated CSI report configuration, and the terminal is instructed to enter a fallback state of the CSI report configuration; otherwise, the fallback state of the corresponding CSI report configuration is not entered. At this time, the activation of the CSI report configuration may be implemented by the first indication field of the DCI, or by an MAC CE. The MAC CE may be a second type of MAC CE. The second type of MAC CE may be configured to activate or deactivate the CSI report configuration, rather than to activate or deactivate the sub-configuration.

In some embodiments, the second indication field may be a newly added field of the DCI or a reserved field formed by reserved bits of the DCI.

In some embodiments, the terminal determines whether to enter a fallback state of the CSI report configuration according to the DCI.

In some embodiments, the terminal determines whether not to perform CSI measurement reporting corresponding to the CSI report configuration according to the DCI.

In some embodiments, the DCI may include a second indication bit, and the second indication bit indicates whether to perform CSI measurement reporting based on the first parameter.

As shown in FIG. 4D, an embodiment of the present disclosure provides an information processing method, which is performed by a terminal, and may include the following steps.

In step S4401, the terminal receives an MAC CE.

In some embodiments, the terminal receives the MAC CE sent by a network device.

In some embodiments, the MAC CE may include a first type of MAC CE and/or a second type of MAC CE.

In some embodiments, the first type of MAC CE may be an enhanced MAC CE.

In some embodiments, the second type of MAC CE may be a legacy MAC CE.

In some embodiments, the first type of MAC CE may be configured to activate or deactivate a sub-configuration in a CSI report configuration.

In some embodiments, the second type of MAC CE may be configured for activation or deactivation of a CSI report configuration.

In some embodiments, the network device may send the first type of MAC CE, and may not send the second type of MAC CE.

In some other embodiments, the network device may send both the first type of MAC CE and the second type of MAC CE.

In some embodiments, the MAC CE sent by the network device is configured for activation or deactivation of a CSI report configuration and/or a sub-configuration in a CSI report configuration.

In some embodiments, the MAC CE sent by the network device is also configured for the terminal to determine whether to enter a fallback state of a corresponding CSI report configuration.

In some embodiments, a sub-configuration of a CSI report configuration includes a first sub-configuration and a second sub-configuration; the first sub-configuration carries a first parameter; and the second sub-configuration is different from the first sub-configuration.

In some embodiments, the first sub-configuration is a sub-configuration with a smallest index in the CSI report configuration; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some other embodiments, a CSI report configuration includes a second sub-configuration and a first parameter, and the first parameter is a CSI parameter included in a part of the CSI report configuration different from the second sub-configuration.

In some embodiments, the terminal determines whether to enter a fallback state of a CSI report configuration according to the first type of MAC CE and/or the second type of MAC CE.

In some embodiments, the terminal receives the second type of MAC CE after receiving the first type of MAC CE. In this case, the terminal determines to enter the fallback state of the CSI report configuration according to the first type of MAC CE and the second type of MAC CE.

In some embodiments, the terminal receives the second type of MAC CE before receiving the first type of MAC CE. In this case, the terminal may determine whether to enter the fallback state of the CSI report configuration according to the second type of MAC CE.

In some embodiments, the terminal receives the second type of MAC CE before receiving the first type of MAC CE. In this case, the second type of MAC CE may also be ignored.

In some other embodiments, the terminal receives the first type of MAC CE after receiving the second type of MAC CE. In this case, the terminal determines whether to enter the fallback state of the CSI report configuration according to the first type of MAC CE.

In some embodiments, in the case that the second type of MAC CE is received after the first type of MAC CE is received, whether the terminal enters the fallback state of the CSI report configuration may be discussed in the following situations.

In some embodiments, in the case that the second type of MAC CE is received after the first type of MAC CE is received, whether the terminal enters the fallback state of the CSI report configuration may be discussed in the following situations.

In some embodiments, in a case that the first type of MAC CE activates an x-th CSI report configuration, activating or deactivating the CSI report configuration according to the second type of MAC CE includes at least one of the following situations: in a case that the second type of MAC CE indicates activation of the x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of the x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of the x-th CSI report configuration, and activation of a sub-configuration of the x-th CSI report configuration.

In some embodiments, in a case that the first type of MAC CE activates an x-th CSI report configuration, activating or deactivating the CSI report configuration according to the second type of MAC CE includes at least one of the following situations: in a case that the second type of MAC CE indicates activation of the x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of the x-th CSI report configuration, the first type of MAC CE and the second type of MAC CE are configured to maintain activation of an activated sub-configuration of the x-th CSI report configuration and instruct the terminal not to enter the fallback state of the CSI report configuration; or, in a case that the second type of MAC CE indicates activation of a y-th CSI report configuration, the first type of MAC CE and the second type of MAC CE are configured to maintain deactivation of a second sub-configuration of the y-th CSI report configuration, activation of the x-th CSI report configuration, and activation of a sub-configuration of the x-th CSI report configuration, and instruct the terminal not to enter the fallback state of the CSI report configuration.

In some other embodiments, the terminal receives the second type of MAC CE before receiving the first type of MAC CE, and the terminal determines whether to enter the fallback state of the CSI report configuration according to the second type of MAC CE, which may include but is not limited to at least one of the following situations: in a case that the second type of MAC CE indicates activation of an n-th CSI report configuration, the second type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the second type of MAC CE is configured to instruct the terminal to enter a fallback state of the n-th CSI report configuration.

In some embodiments, n may be 0 or a positive integer.

In a network energy saving (NES) scenario, in order to reduce the power overhead of network devices, the network devices may dynamically reduce the number of spatial elements or the transmission power corresponding to the transmission of downlink data based on the dynamic changes of the transmission load, thereby reducing the network energy overhead. Considering the dynamic adaptation spatial pattern (SD) mode of the spatial elements or the transmission power, the CSI measurement reporting on the sub-configuration granularity is performed. For the same CSI report configuration, L sub-configurations may be included, and each sub-configuration is associated with a specific spatial pattern (SD) and/or multiple power domain patterns.

In order to improve the reporting efficiency of the terminal and reduce the corresponding reporting overhead, for the configured L sub-configurations, the base station may activate/deactivate N sub-configuration of the L sub-configurations for reporting through a relevant signaling; and for the SP CSI reporting, the activation/deactivation may be performed through the MAC CE. However, in the existing mechanism, the MAC CE only activates/deactivates reporting on the CSI report configuration (CSI report config) granularity. After the introduction of reporting on the sub-configuration granularity, how to activate/deactivate the N sub-configuration of the L sub-configurations for reporting is still under further discussion.

In a case that the CSI report configuration (CSI report config) includes multiple reporting sub-configurations, the signaling is designed to indicate activated/deactivated reporting sub-configurations, so as to improve the efficiency and accuracy of CSI measurement reporting and achieve consistent understanding between the terminal and the base station.

In a case that a CSI report configuration (CSI report config) includes multiple reporting sub-configurations, the terminal receives an indication signaling, determines an activated reporting sub-configuration, and performs corresponding CSI reporting.

A reserved bit field (e.g., a reserved (R) field) of the existing MAC CE is reused or a new field is introduced. The bit introduced in the MAC CE may be Nᵢ; and the activation/deactivation state of a corresponding sub-configuration is indicated by means of a bitmap.

In some embodiments, N₀ corresponds to a sub-configuration (sub-configuration) with a smallest sub-configuration identifier (sub-configuration id) or position index in the CSI report configuration (CSI report config).

In some embodiments, Nᵢ corresponds to a sub-configuration with a (i+1)-th smallest sub-configuration identifier (sub-configuration id) or position index in the CSI report configuration.

In some embodiments, in a case that Nᵢ is 0, the corresponding sub-configuration is indicated to be deactivated; and in a case that Nᵢ is 1, the corresponding sub-configuration is indicated to be activated.

In some embodiments, the terminal determines the indication function of the MAC CE based on the reserved field of Oct 1. That is, in a case that the reserved field indicates to be 0, the MAC CE is the second type of MAC CE (legacy MAC CE). The second type of MAC CE indicates the activation/deactivation of the CSI report configuration. In a case that the reserved field indicates to be 1, the MAC CE is the first type of MAC CE. The first type of MAC CE indicates the activation/deactivation of the sub-configuration in the CSI report configuration.

In a case that the MAC CE has a fixed size of N bits, N is greater than or equal to 16.

In a case that a size of the MAC CE is variable, a length of the MAC CE is a variable size.

The specific implementations of the present disclosure will be described from the perspective of the terminal and the base station in the following.

The terminal has at least one of the following behaviors.

In a case that a CSI report configuration includes multiple reporting sub-configurations, the terminal receives an indication signaling to determine whether to execute the fallback state of the CSI report configuration. For example, in the fallback state, the terminal performs CSI measurement and/or reporting based on the CSI report configuration that does not include the sub-configuration. In a case that a specific CSI-report is configured with L sub-configurations, the specific implementation includes the following modes.

Mode 1: for an SP/AP CSI report configuration, in a case that a corresponding activation signaling does not activate any sub-configuration, the terminal performs CSI measurement reporting based on a legacy parameter. The legacy parameter may be one of the aforementioned first parameters.

The parameter based on the sub-configuration is still configured with the legacy parameter. For example, N₁, N₂ and N_{g} are used for type 1 CSI measurement and reporting.

In some embodiments, a specific trigger state indication is defined for the MAC CE.

For example, a CSI report configuration corresponding to the trigger state indication does not include activation information of any sub-configuration, and in a case that the corresponding CSI report configuration is activated, the terminal performs CSI measurement and reporting based on the legacy parameter.

Mode 2: the fallback state of the CSI report is configured based on a specific sub-configuration. For example, the sub-configuration corresponds to a sub-configuration with a smallest configuration index.

A measurement parameter based on the sub-configuration does not need to be configured with a legacy parameter. For example, N₁, N₂, and N_{g} are configured only based on the sub-configuration.

Mode 3: a new indication signaling is introduced. The new indication signaling may be an RRC signaling, MAC CE or DCI, etc. In a case that any sub-configuration is not triggered, based on the indication signaling, the network device instructs the terminal not to perform measurement reporting or to perform CSI measurement reporting based on the CSI report configuration (CSI report config) in the fallback state.

### Base station side:

In a case that a CSI report configuration (CSI report config) includes multiple reporting sub-configurations, the base station transmits an indication signaling to indicate the fallback state of the CSI report configuration. In a case that a specific CSI report configuration is configured with L sub-configurations, the specific implementation includes the following modes.

Mode 1: for an SP/AP CSI report configuration, the base station sends an activation signaling, and in a case that the signaling does not activate any sub-configuration, the terminal is instructed whether to enter the fallback state of the CSI report configuration.

A measurement parameter based on the sub-configuration is still configured with a legacy parameter. For example, N₁, N₂ and N_{g} are used for type 1 CSI measurement and reporting.

In some embodiments, a specific trigger state is defined. For example, a CSI report configuration corresponding to the trigger state does not include activation information of any sub-configuration, and in a case that the corresponding report configuration is activated, the corresponding CSI report configuration is instructed to enter the fallback state.

Mode 2: the fallback state of the CSI report configuration is configured based on a specific sub-configuration.

For example, the sub-configuration corresponds to a sub-configuration with a smallest configuration index. The base station instructs a corresponding CSI report configuration to enter the fallback state by configuring/triggering the specific sub-configuration. The specific sub-configuration may be a sub-configuration carrying the first parameter.

In this case, the CSI report configuration does not need to be configured with the legacy parameter. In this case, the CSI report configuration only includes the sub-configuration.

Mode 3: a new indication signaling is introduced, such as an RRC signaling, MAC CE or DCI. In a case that any sub-configuration is not triggered, through the indication signaling, the terminal is instructed not to perform measurement reporting or to perform CSI measurement reporting based on the legacy parameter.

The specific implementations of the present disclosure will be described from the perspective of the terminal in the following.

### Implementations:

Assuming that the terminal supports the NES feature, the terminal supports measurement reporting of multiple spatial domain (SD) patterns and/or multiple power domain (PD) patterns, and the NES supports sub-CSI reporting of multiple sub-configurations defined for the same CSI report configuration.

Compared with that one CSI report configuration corresponds to one CSI reporting, one CSI report configuration corresponds to multiple sub-configurations, and each sub-configuration corresponds to one sub-CSI reporting, which may effectively improve the dynamic CSI measurement reporting performance.

It is worth noting that the fallback state of the CSI-RS report means that the terminal performs CSI measurement reporting based on CSI-RS report legacy parameters.

The specific implementations will be described for the indication signaling of the sub-configuration under different reporting types in the following.

Implementation 1: the semi-persistent (SP) CSI reporting is triggered based on the MAC CE.

Implementation 1-1: referring to FIG. 5A and FIG. 5B, in order to indicate activation of the sub-configuration via the MAC CE, the reserved bits of the MAC CE are reused. For example, the R field indicates the activation state of a corresponding sub-configuration, and the MAC CE includes a specific structure: Nᵢ indicates the activation state of a sub-configuration corresponding to at least one activated CSI report configuration, and the MAC CE has a fixed bit length of 16 bits.

Mode 1-1-1: R of Oct 1 indicates the indication state of the CSI report configuration. For example, in a case that R is 0, the terminal performs CSI measurement reporting based on the legacy parameter, and in a case that R is 1, the terminal performs the measurement reporting based on the activated sub-configuration. In a case that none of the sub-configurations is activated, the terminal determines that the corresponding CSI report configuration is deactivated. In the case that the corresponding CSI report configuration is deactivated, the terminal does not perform CSI measurement and reporting in accordance to the CSI report configuration.

Mode 1-1-2: in a case that any sub-configuration corresponding to a specific CSI report configuration is not activated and the corresponding CSI report configuration is activated, the terminal determines that the corresponding CSI report configuration enters a fallback state. That is, in the fallback state, the measurement reporting is performed based on the legacy parameter of the CSI report configuration.

Implementation 1-2: referring to FIG. 5C, the embodiment of the present disclosure provides a MAC CE which has a newly added field indicating the activation state of a corresponding sub-configuration.

The corresponding N₀, ..., N₇ in Oct n are applied to the corresponding activated CSI report configurations indicated by S₀, S₁, ..., S₃. The MAC CE has a variable bit length.

Mode 1-2-1: R in Oct 1 indicates the indication state of the CSI report configuration. For example, in a case that R is 0, the terminal performs CSI measurement reporting based on the legacy parameter, and in a case that R is 1, the terminal performs the measurement reporting based on the activated sub-configuration. In a case that none of the sub-configurations is activated, the terminal determines that the corresponding CSI report configuration is deactivated.

Mode 1-2-2: in a case that the sub-configuration (sub-config) corresponding to a specific CSI report configuration is not activated, and the corresponding CSI report configuration is activated, the terminal determines that the corresponding CSI report configuration enters a fallback state. That is, the terminal performs the measurement reporting based on the legacy parameter of the CSI report configuration.

Implementation 2: for aperiodic or semi-persistent reporting triggered by DCI, at least one CSI report configuration is activated through signaling. For the activated CSI report configuration, some or all sub-configurations therein may be activated. The CSI report configuration and the corresponding sub-configuration are configured based on an RRC signaling. Possible implementations are as follows.

Implementation 2-1: in a case that a corresponding CSI report configuration is activated and none of sub-configurations in the CSI report configuration is activated, the terminal determines to enter the fallback state of the CSI report configuration. In this mode, for the parameters based on the sub-configuration, the corresponding legacy parameters are still configured outside the sub-configuration, and in the fallback state of the CSI report configuration, the terminal performs CSI measurement reporting based on the legacy parameters.

Implementation 2-2: in a case that a corresponding CSI report configuration is activated, the terminal expects at least one sub-configuration in the CSI report configuration to be activated. And/or, in a case that a corresponding CSI report configuration is activated, or any sub-configuration in the CSI report configuration is not activated, the terminal does not perform measurement reporting based on the CSI report configuration. In this case, the first parameter may be carried in a specific sub-configuration in the CSI report configuration.

Implementation 2-3: based on a new field or an existing legacy reserved field of DCI, it is indicated that in a case that the CSI report configuration is activated and any sub-configuration in the CSI report configuration is not activated, this corresponds to the following two states.

State 1: the terminal performs CSI measurement reporting based on the legacy parameter.

State 2: the CSI report configuration is deactivated, that is, the terminal does not perform measurement reporting based on the CSI report configuration.

### Implementation 3:

This implementation mainly considers the parsing of the signaling by the terminal in the scenario where the first type of MAC CE (enhanced MAC CE) and the second type of MAC CE (legacy MAC CE) coexist.

Mode 1: the terminal is not allowed to receive the original MAC CE indicating the activation or deactivation of the SP CSI report configuration on PUCCH (SP CSI reporting on PUCCH Activation/Deactivation MAC CE). For example, the sub-header of the MAC CE may carry a local channel identifier (LCID) equal to 1.

Mode 2: the terminal is allowed to receive the original MAC CE indicating the activation or deactivation of the SP CSI report configuration on PUCCH (SP CSI reporting on PUCCH Activation/Deactivation MAC CE). For example, the sub-header of the MAC CE may carry a local channel identifier (LCID) equal to 1.

That is, in some embodiments, the first type of MAC CE and the second type of MAC CE are different MAC CEs, and the LCIDs of the first type of MAC CE and the second type of MAC CE are different.

In some embodiments, in a case that the original second type of MAC CE is received, all sub-configurations of the CSI report configuration indicated to be activated by the first type of MAC CE are deactivated.

In this case, when the sub-configurations of the CSI report configuration activated by the first type of MAC CE are deactivated and the CSI report configuration includes the legacy parameter, the fallback state corresponding to the CSI report configuration may be entered.

In some embodiments, in a case that the original second type of MAC CE is received, all sub-configurations of the CSI report configuration indicated by the second type of MAC CE are activated. At this time, CSI measurement reporting may be performed according to the sub-configurations.

In some embodiments, in a case that the original second type of MAC CE is received, all sub-configurations of the CSI report configuration indicated by the second type of MAC CE are deactivated, and the terminal performs CSI measurement reporting based on the legacy parameter of the CSI report configuration in the fallback state.

In some embodiments, in a case that the original second type of MAC CE is received, it indicates that the second type of MAC CE indicates a newly activated CSI report configuration. The CSI report configuration indicated to be activated by the second type of MAC CE has not been activated by the first type of MAC CE received previously, then all sub-configurations of the newly activated CSI report configuration indicated by the second type of MAC CE are deactivated. Other previously activated CSI report configurations and their sub-configurations continue to remain activated.

In the scenario where the first type of report configuration (enhanced CSI report) and the second type of report configuration (legacy CSI report) coexist, and/or the scenario where the second type of MAC CE and the first type of MAC CE coexist, corresponding to the NES scenario of this embodiment, a corresponding indication signaling is designed to determine the signaling indication in the fallback state corresponding to the CSI report configuration.

Terminal side: in a case that a CSI report configuration (CSI report config) includes multiple reporting sub-configurations, the terminal receives an indication signaling and determines to enter the fallback state corresponding to the CSI report configuration. For example, based on the legacy signaling, the terminal is instructed whether to enter the fallback state corresponding to the CSI report configuration.

Network side: in a case that a CSI report configuration (CSI report config) includes multiple reporting sub-configurations, the base station transmits an indication signaling to instruct the terminal to enter the fallback state of the corresponding CSI report configuration.

Embodiments of the present disclosure also provide a device for implementing any of the above methods. For example, a device is provided, and the device includes a unit or module for implementing each step performed by the terminal in any of the above methods. For another example, another device is provided, and the device includes a unit or module for implementing each step performed by the network device (for example, the access network device, or the core network device, etc.) in any of the above methods.

It should be understood that the division of the units or modules in the above devices is only a division of logical functions, and in actual implementations, they may be fully or partially integrated into one physical entity, or they may be physically separated. In addition, the units or modules in the devices may be implemented by means of a processor calling software. For example, the device includes a processor, the processor is connected to a memory, and instructions are stored in the memory. The processor calls the instructions stored in the memory to implement any of the above methods or implement the functions of the units or modules of the above devices. The processor is, for example, a general-purpose processor, such as a central processing unit (CPU) or a microprocessor, and the memory is a memory inside the device or a memory outside the device. Alternatively, the units or modules in the devices may be implemented by means of hardware circuits, and the functions of some or all of the units or modules may be realized by designing the hardware circuits. The above hardware circuits may be understood as one or more processors. For example, in an implementation, the above hardware circuit is an application-specific integrated circuit (ASIC), and the functions of some or all of the above units or modules are realized by designing the logical relationship of the components in the circuit. For another example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above devices may be realized by means of the processor calling software, or by means of the hardware circuit, or in part by means of the processor calling software, and in the rest by means of the hardware circuit.

In embodiments of the present disclosure, the processor is a circuit with a signal processing capability. In an implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may implement certain functions through the logical relationship of a hardware circuit, and the logical relationship of the hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, the processor may also be a hardware circuit designed for artificial intelligence, which may be understood as an ASIC, such as a neural network processing unit (NPU), a tensor processing unit (TPU), a deep learning processing unit (DPU), etc.

FIG. 6A is a block diagram of a network device 102 according to an illustrative embodiment. As shown in FIG. 6A, the network device 102 in the embodiment of the present disclosure includes: a sending module 110 configured to send a control signaling to a terminal. The control signaling is configured for the terminal to determine whether to enter a fallback state of a CSI report configuration.

Optionally, the sending module 110 may be configured to execute steps related to information sending and receiving performed by the network device in any of the above channel state information (CSI) report configuration activation methods, which are not repeated here.

In some embodiments, the network device 102 further includes one or more processing modules configured to perform information processing.

In some embodiments, the network device 102 further includes one or more sending modules configured to execute steps related to sending in any of the methods performed by the network device.

In some embodiments, a sub-configuration of the CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, an index corresponding to the first sub-configuration is equal to 0; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some embodiments, the CSI report configuration includes at least one second sub-configuration and a first parameter, and the first parameter is a CSI parameter included in a part of the CSI report configuration different from the at least one second sub-configuration.

In some embodiments, in a case that the at least one second sub-configuration is activated and/or the first sub-configuration is activated, the terminal performs CSI measurement reporting based on the sub-configuration of the CSI report configuration; and in the fallback state of the CSI report configuration, the terminal performs the CSI measurement reporting based on the first parameter of the CSI report configuration.

In some embodiments, the control signaling includes a first type of media access control (MAC) control element (CE); and the first type of MAC CE includes a first indication bit, and the first indication bit is configured to activate or deactivate the sub-configuration of the CSI report configuration.

In some embodiments, the first type of MAC CE further includes a second indication bit indicating whether to perform CSI measurement reporting based on the first parameter; and in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or, in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

In some embodiments, in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

In some embodiments, the first type of MAC CE further includes: a third indication bit configured to activate or deactivate the CSI report configuration.

In some embodiments, the first indication bit and the third indication bit are located in different octets of the first type of MAC CE; or, at least part of the first indication bit and at least part of the third indication bit are located in a same octet of the first type of MAC CE.

In some embodiments, the control signaling includes downlink control information (DCI); the DCI includes a first indication field; and the first indication field indicates a trigger state, and the trigger state corresponds to an activation state combination of the CSI report configuration.

In some embodiments, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or,

in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

In some embodiments, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

In some embodiments, the MAC CE further includes a second type of MAC CE; the second type of MAC CE is configured for activation or deactivation of the CSI report configuration; and the second type of MAC CE does not include the first indication bit.

In some embodiments, sending by the network device the control signaling to the terminal includes: sending the second type of MAC CE to the terminal after sending the first type of MAC CE to the terminal, where the first type of MAC CE and the second type of MAC CE are configured for the terminal to determine whether to enter the fallback state of the CSI report configuration.

In some embodiments, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

In some embodiments, sending by the network device the control signaling to the terminal includes: sending the first type of MAC CE to the terminal after sending a second type of MAC CE to the terminal, where the first type of MAC CE is configured for the terminal to determine whether to enter the fallback state of the CSI report configuration; or, sending a second type of MAC CE to the terminal, where the second type of MAC CE is configured for the terminal to determine whether to enter the fallback state of the CSI report configuration.

In some embodiments, in a case that the second type of MAC CE indicates activation of an n-th CSI report configuration, the second type of MAC CE indicates activation of all sub-configurations of the n-th CSI report configuration; or, in a case that the second type of MAC CE indicates activation of an n-th CSI report configuration, the second type of MAC CE is configured to instruct the terminal to enter a fallback state of the n-th CSI report configuration.

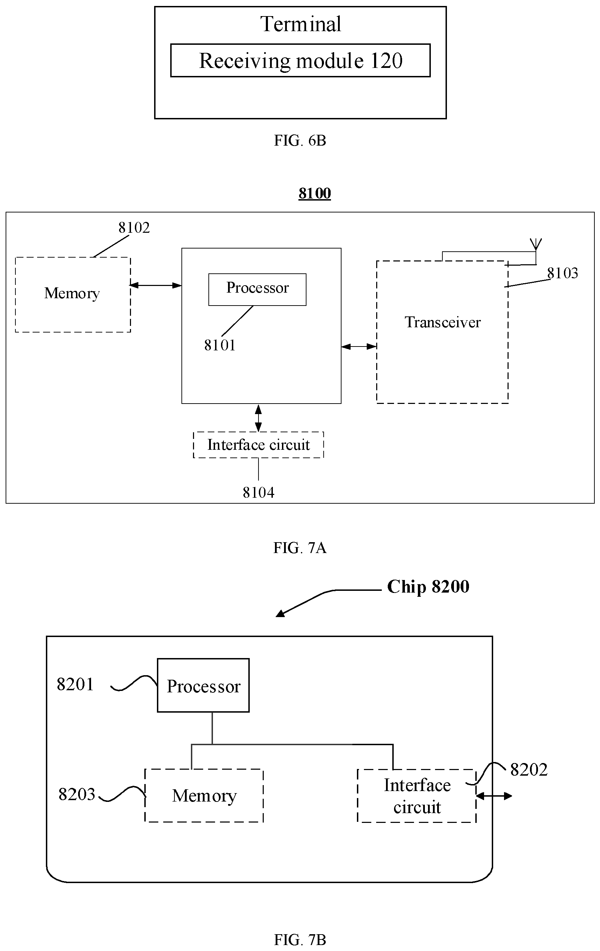

FIG. 6B is a block diagram of a terminal 101 according to an illustrative embodiment. As shown in FIG. 6B, the terminal 101 in the embodiment of the present disclosure includes: a receiving module 120 configured to receive a control signaling sent by a network device, where the control signaling is configured for the terminal to determine whether to enter a fallback state of a CSI report configuration.

Optionally, the receiving module may be configured to execute steps related to information receiving performed by the terminal in any of the above channel state information (CSI) report configuration activation methods, which are not repeated here.

In some embodiments, a sub-configuration of the CSI report configuration includes a first sub-configuration and at least one second sub-configuration; the first sub-configuration carries a first parameter; and the at least one second sub-configuration is different from the first sub-configuration.

In some embodiments, the first sub-configuration is a sub-configuration with a smallest index in the CSI report configuration; or, an index corresponding to the first sub-configuration is equal to 0; or, the first sub-configuration is a sub-configuration with a largest index in the CSI report configuration; or, the first sub-configuration is a sub-configuration with a specified index in the CSI report configuration; or, the first sub-configuration is a sub-configuration at a specified position in the CSI report configuration.

In some embodiments, the CSI report configuration includes at least one second sub-configuration and a first parameter, and the first parameter is a CSI parameter included in a part of the CSI report configuration different from the at least one second sub-configuration.

In some embodiments, the method further includes: performing by the terminal CSI measurement reporting based on the sub-configuration of the CSI report configuration, in a case that the at least one second sub-configuration is activated and/or the first sub-configuration is activated; and performing by the terminal the CSI measurement reporting based on the first parameter of the CSI report configuration in the fallback state of the CSI report configuration

In some embodiments, the control signaling includes a first type of media access control (MAC) control element (CE); and the first type of MAC CE includes a first indication bit, and the first indication bit is configured to activate or deactivate a sub-configuration of the CSI report configuration.

In some embodiments, the first type of MAC CE further includes a second indication bit indicating whether to perform CSI measurement reporting based on a first parameter; and in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or, in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

In some embodiments, in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

In some embodiments, the first type of MAC CE includes: a third indication bit configured to activate or deactivate the CSI report configuration.

In some embodiments, the first indication bit and the third indication bit are located in different octets of the first type of MAC CE; or, at least part of the first indication bit and at least part of the third indication bit are located in a same octet of the first type of MAC CE.

In some embodiments, the control signaling includes downlink control information (DCI); the DCI includes a first indication field; and the first indication field indicates a trigger state, and the trigger state corresponds to an activation state combination of the CSI report configuration.

In some embodiments, in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or, in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

In some embodiments, the DCI includes a second indication field; and the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

In some embodiments, the MAC CE further includes a second type of MAC CE; the second type of MAC CE is configured for activation or deactivation of the CSI report configuration; and the second type of MAC CE does not include the first indication bit.

In some embodiments, the receiving module is configured to receive the second type of MAC CE sent by the network device after receiving the first type of MAC CE sent by the network device, where the first type of MAC CE and the second type of MAC CE are configured for the terminal to determine whether to enter the fallback state of the CSI report configuration.

In some embodiments, in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or, in a case that the second type of MAC CE indicates activation of an x-th CSI report configuration, the first type of MAC CE and the second type of MAC CE are configured to maintain activation of an activated sub-configuration of the x-th CSI report configuration; or, in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

In some embodiments, the receiving module is further configured to stop receiving the second type of MAC CE sent by the network device in case of receiving the first type of MAC CE sent by the network device.

In some embodiments, the receiving module is further configured to receive a second type of MAC CE sent by the network device after receiving a first type of MAC CE, where the terminal determines whether to enter the fallback state of the CSI report configuration according to the second type of MAC CE; or, receive a second type of MAC CE sent by the network device after receiving a first type of MAC CE, and ignore the first type of MAC CE.

In some embodiments, in a case that the second type of MAC CE indicates activation of an n-th CSI report configuration, the first type of MAC CE indicates activation of all sub-configurations of the n-th CSI report configuration, and instructs the terminal not to enter a fallback state of the n-th CSI report configuration; or, in a case that the second type of MAC CE indicates activation of an n-th CSI report configuration, the first type of MAC CE and the second type of MAC CE indicate deactivation of all sub-configurations of the n-th CSI report configuration, and instruct the terminal to enter a fallback state of the n-th CSI report configuration.

FIG. 7A is a block diagram of a communication device 8100 according to an embodiment of the present disclosure. The communication device 8100 may be a terminal (e.g., user equipment (UE), etc.), or a network device (e.g., an access network device or a core network device, etc.), or a chip, chip system, or processor, etc. that supports the network device to implement any of the above methods, or a chip, chip system, or processor, etc. that supports the terminal to implement any of the above channel state information (CSI) report configuration activation methods. The communication device 8100 may be used to implement the channel state information (CSI) report configuration activation method described in the above method embodiments, and for details, reference may be made to the descriptions in the above method embodiments.

As shown in FIG. 7A, the communication device 8100 includes one or more processors 8101. The processor 8101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, a terminal, a terminal chip, a DU or a CU, etc.), execute a program, and process the data of the program. The processor 8101 is used to call an instruction so that the communication device 8100 performs any of the above channel state information (CSI) report configuration activation methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the communication (such as sending and receiving) steps in the above methods are executed by the transceiver 8103, and the other steps are executed by the processor 8101.

In some embodiments, the transceiver may include a receiver and a transmitter, and the receiver and the transmitter may be separate or integrated. Optionally, the terms such as transceiver, transceiver unit, transceiving machine, transceiver circuit, etc. may be used interchangeably, the terms such as transmitter, transmitting unit, transmitting machine, transmitting circuit, etc. may be used interchangeably, and the terms such as receiver, receiving unit, receiving machine, receiving circuit, etc. may be used interchangeably.

Optionally, the communication device 8100 further includes one or more interface circuits 8104, which are connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 7A. The communication device may be an independent device or may be part of a large device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 7B is a block diagram of a chip 8200 according to an embodiment of the present disclosure. In a case that the communication device 8100 may be a chip or a chip system, reference may be made to the schematic diagram of the chip 8200 shown in FIG. 7B, but the present disclosure is not limited thereto.

The chip 8200 includes one or more processors 8201, and the processor 8201 is used to call instructions to cause the chip 8200 to perform any of the above channel state information (CSI) report configuration activation methods.

In some embodiments, the chip 8200 further includes one or more interface circuits 8202, which are connected to the memory 8203. The interface circuit 8202 may be used to receive signals from the memory 8203 or other devices, and the interface circuit 8202 may be used to send signals to the memory 8203 or other devices. For example, the interface circuit 8202 may read the instructions stored in the memory 8203 and send the instructions to the processor 8201. Optionally, the terms such as interface circuit, interface, transceiver pin, and transceiver may be used interchangeably.

In some embodiments, the chip 8200 further includes one or more memories 8203 for storing instructions. Optionally, all or part of the memories 8203 may be located outside the chip 8200.

The present disclosure also provides a storage medium, on which instructions are stored, and when the instructions are executed on the communication device 8100, the communication device 8100 performs any of the above methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a transitory storage medium.

The present disclosure also provides a program product, and when the program product is executed by the communication device 8100, the communication device 8100 performs any of the above channel state information (CSI) report configuration activation methods. Optionally, the program product is a computer program product.

The present disclosure also provides a computer program, which, when executed on a computer, causes the computer to perform any of the above channel state information (CSI) report configuration activation methods.

Those skilled in the art will readily appreciate other implementations of the embodiments of the present disclosure after considering the specification and practicing the invention disclosed herein. The present disclosure is intended to cover any variations, uses, or adaptations of the embodiments of the present disclosure, which follow the general principles of the embodiments of the present disclosure and include common knowledge or customary technical means in the art that are not disclosed in the present disclosure. The specification and embodiments are to be considered merely illustrative, and the true scope and spirit of the embodiments of the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. An information processing method, performed by a network device, and comprising:
sending a control signaling to a terminal, wherein the control signaling is configured for the terminal to determine whether to enter a fallback state of a channel state information (CSI) report configuration.

2. The method according to claim 1, wherein a sub-configuration of the CSI report configuration comprises a first sub-configuration and at least one second sub-configuration; the first sub-configuration carries a first parameter; and the at least one second sub-configuration is different from the first sub-configuration.

3. The method according to claim 2, wherein
the first sub-configuration is a sub-configuration with a smallest index in the CSI report configuration; or
an index corresponding to the first sub-configuration is equal to 0; or
the first sub-configuration is a sub-configuration with a largest index in the CSI report configuration; or
the first sub-configuration is a sub-configuration with a specified index in the CSI report configuration; or
the first sub-configuration is a sub-configuration at a specified position in the CSI report configuration.

4. The method according to claim 1, wherein the CSI report configuration comprises at least one second sub-configuration and a first parameter, and the first parameter is a CSI parameter comprised in a part of the CSI report configuration different from the at least one second sub-configuration.

5. The method according to any one of claims 2 to 4, wherein
in a case that the at least one second sub-configuration is activated and/or the first sub-configuration is activated, the terminal performs CSI measurement reporting based on the sub-configuration of the CSI report configuration; and
in the fallback state of the CSI report configuration, the terminal performs the CSI measurement reporting based on the first parameter of the CSI report configuration.

6. The method according to any one of claims 2 to 5, wherein the control signaling comprises a first type of media access control (MAC) control element (CE); and
the first type of MAC CE comprises a first indication bit, and the first indication bit is configured to activate or deactivate the sub-configuration of the CSI report configuration.

7. The method according to claim 6, wherein the first type of MAC CE further comprises a second indication bit indicating whether to perform CSI measurement reporting based on the first parameter; and
wherein in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or
in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

8. The method according to claim 7, wherein in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

9. The method according to any one of claims 6 to 8, wherein the first type of MAC CE further comprises a third indication bit configured to activate or deactivate the CSI report configuration.

10. The method according to claim 9, wherein
the first indication bit and the third indication bit are located in different octets of the first type of MAC CE; or
at least part of the first indication bit and at least part of the third indication bit are located in a same octet of the first type of MAC CE.

11. The method according to any one of claims 1 to 5, wherein the control signaling comprises downlink control information (DCI);
the DCI comprises a first indication field; and
the first indication field indicates a trigger state, and the trigger state corresponds to an activation state combination of the CSI report configuration.

12. The method according to claim 11, wherein
in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or
in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

13. The method according to claim 11, wherein the DCI comprises a second indication field; and
the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

14. The method according to claim 7, wherein the MAC CE further comprises a second type of MAC CE; the second type of MAC CE is configured for activation or deactivation of the CSI report configuration; and the second type of MAC CE does not include the first indication bit.

15. The method according to claim 14, wherein sending by the network device the control signaling to the terminal comprises:
sending the second type of MAC CE to the terminal after sending the first type of MAC CE to the terminal, wherein the first type of MAC CE and the second type of MAC CE are configured for the terminal to determine whether to enter the fallback state of the CSI report configuration.

16. The method according to claim 15, wherein
in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or
in a case that the second type of MAC CE indicates activation of an x-th CSI report configuration, the first type of MAC CE and the second type of MAC CE are configured to maintain activation of an activated sub-configuration of the x-th CSI report configuration; or
in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

17. The method according to claim 6, wherein sending by the network device the control signaling to the terminal comprises:
sending the first type of MAC CE to the terminal after sending a second type of MAC CE to the terminal, wherein the first type of MAC CE is configured for the terminal to determine whether to enter the fallback state of the CSI report configuration; or
sending a second type of MAC CE to the terminal, wherein the second type of MAC CE is configured for the terminal to determine whether to enter the fallback state of the CSI report configuration.

18. The method according to claim 17, wherein
in a case that the second type of MAC CE indicates activation of an n-th CSI report configuration, the second type of MAC CE indicates activation of all sub-configurations of the n-th CSI report configuration; or
in a case that the second type of MAC CE indicates activation of an n-th CSI report configuration, the second type of MAC CE is configured to instruct the terminal to enter a fallback state of the n-th CSI report configuration.

19. An information processing method, performed by a terminal, and comprising:
receiving a control signaling sent by a network device, wherein the control signaling is configured for the terminal to determine whether to enter a fallback state of a channel state information (CSI) report configuration.

20. The method according to claim 19, wherein a sub-configuration of the CSI report configuration comprises a first sub-configuration and at least one second sub-configuration; the first sub-configuration carries a first parameter; and the at least one second sub-configuration is different from the first sub-configuration.

21. The method according to claim 20, wherein
the first sub-configuration is a sub-configuration with a smallest index in the CSI report configuration; or
an index corresponding to the first sub-configuration is equal to 0; or
the first sub-configuration is a sub-configuration with a largest index in the CSI report configuration; or
the first sub-configuration is a sub-configuration with a specified index in the CSI report configuration; or
the first sub-configuration is a sub-configuration at a specified position in the CSI report configuration.

22. The method according to claim 19, wherein the CSI report configuration comprises at least one second sub-configuration and a first parameter, and the first parameter is a CSI parameter comprised in a part of the CSI report configuration different from the at least one second sub-configuration.

23. The method according to any one of claims 19 to 22, further comprising:
performing, by the terminal, CSI measurement reporting based on the sub-configuration of the CSI report configuration, in a case that the at least one second sub-configuration is activated and/or the first sub-configuration is activated; and
performing, by the terminal, the CSI measurement reporting based on the first parameter of the CSI report configuration in the fallback state of the CSI report configuration.

24. The method according to any one of claims 19 to 23, wherein the control signaling comprises a first type of media access control (MAC) control element (CE); and
the first type of MAC CE comprises a first indication bit, and the first indication bit is configured to activate or deactivate a sub-configuration of the CSI report configuration.

25. The method according to claim 24, wherein the first type of MAC CE further comprises a second indication bit indicating whether to perform CSI measurement reporting based on a first parameter; and
wherein in a case that any second sub-configuration of the CSI report configuration is indicated to be deactivated, the second indication bit indicates a first value, and the first type of MAC CE is configured to instruct the terminal to determine to perform the CSI measurement reporting based on the first parameter; or
in a case that any second sub-configuration and/or the first sub-configuration of the CSI report configuration are indicated to be deactivated, the second indication bit indicates a second value, and the first type of MAC CE is configured to instruct the CSI measurement reporting not to be performed based on the first parameter.

26. The method according to claim 25, wherein in a case that any second sub-configuration and/or the first sub-configuration of the CSI report configuration are indicated to be deactivated, the second indication bit indicates the second value, and the first type of MAC CE is configured to instruct the terminal not to perform the CSI measurement reporting.

27. The method according to any one of claims 24 to 26, wherein the first type of MAC CE comprises a third indication bit configured to activate or deactivate the CSI report configuration.

28. The method according to claim 27, wherein
the first indication bit and the third indication bit are located in different octets of the first type of MAC CE; or
at least part of the first indication bit and at least part of the third indication bit are located in a same octet of the first type of MAC CE.

29. The method according to any one of claims 19 to 28, wherein the control signaling comprises downlink control information (DCI);
the DCI comprises a first indication field; and
the first indication field indicates a trigger state, and the trigger state corresponds to an activation state combination of the CSI report configuration.

30. The method according to claim 29, wherein
in a case that the first indication field corresponds to a case that at least one CSI report configuration is activated and none of at least one second sub-configuration of the activated at least one CSI report configuration is activated, the DCI instructs the terminal to enter the fallback state of the CSI report configuration; or
in a case that the first indication field corresponds to a case that at least one CSI report configuration is activated and a first sub-configuration and/or a second sub-configuration of the activated at least one CSI report configuration are activated, the DCI instructs the terminal not to enter the fallback state of the CSI report configuration.

31. The method according to claim 29, wherein the DCI comprises a second indication field; and the second indication field is configured to instruct the terminal to enter the fallback state of the CSI report configuration or not to perform CSI measurement reporting, in a case that the first indication field corresponds to a case that at least one CSI report configuration is activated and that any second sub-configuration of the activated at least one CSI report configuration is not activated and/or a first sub-configuration of the activated at least one CSI report configuration is not activated.

32. The method according to claim 24, wherein the MAC CE further comprises a second type of MAC CE; the second type of MAC CE is configured for activation or deactivation of the CSI report configuration; and the second type of MAC CE does not include the first indication bit.

33. The method according to claim 32, wherein receiving the control signaling sent by the network device comprises:
receiving the second type of MAC CE sent by the network device after receiving the first type of MAC CE sent by the network device, wherein the first type of MAC CE and the second type of MAC CE are configured for the terminal to determine whether to enter the fallback state of the CSI report configuration.

34. The method according to claim 33, wherein in a case that the second type of MAC CE indicates activation of an x-th CSI report configuration, the first type of MAC CE and the second type of MAC CE indicate deactivation of an activated sub-configuration of the x-th CSI report configuration and instruct the terminal to enter a fallback state of the x-th CSI report configuration; or
in a case that the second type of MAC CE indicates activation of an x-th CSI report configuration, the first type of MAC CE and the second type of MAC CE are configured to maintain activation of an activated sub-configuration of the x-th CSI report configuration; or
in a case that the second type of MAC CE indicates activation of a y-th CSI report configuration, the first type of MAC CE and the second type of MAC CE are configured to maintain deactivation of the y-th CSI report configuration, activation of an x-th CSI report configuration, and activation of a sub-configuration of the x-th CSI report configuration.

35. The method according to claim 32, further comprising:
stopping by the terminal receiving the second type of MAC CE sent by the network device in case of receiving the first type of MAC CE sent by the network device.

36. The method according to claim 19, further comprising:
receiving a second type of MAC CE sent by the network device after receiving a first type of MAC CE, and determining by the terminal whether to enter the fallback state of the CSI report configuration according to the second type of MAC CE; or
receiving a second type of MAC CE sent by the network device after receiving a first type of MAC CE, and ignoring the first type of MAC CE.

37. The method according to claim 36, wherein
in a case that the second type of MAC CE indicates activation of an n-th CSI report configuration, the first type of MAC CE indicates activation of all sub-configurations of the n-th CSI report configuration, and instructs the terminal not to enter a fallback state of the n-th CSI report configuration; or
in a case that the second type of MAC CE indicates activation of an n-th CSI report configuration, the first type of MAC CE and the second type of MAC CE indicate deactivation of all sub-configurations of the n-th CSI report configuration, and instruct the terminal to enter a fallback state of the n-th CSI report configuration.

38. A network device, comprising a sending module configured to send a control signaling to a terminal, wherein the control signaling is configured for the terminal to determine whether to enter a fallback state of a channel state information (CSI) report configuration.

39. A terminal, comprising a receiving module configured to receive a control signaling sent by a network device, wherein the control signaling is configured for the terminal to determine whether to enter a fallback state of a channel state information (CSI) report configuration.

40. A communication device, comprising:
one or more processors configured to call instructions to cause the communication device to perform a channel state information (CSI) report configuration activation method according to any one of claims 1 to 18 or claims 19 to 37.

41. A storage medium, storing instructions, which are configured to, when executed on a communication device, cause the communication device to perform a channel state information (CSI) report configuration activation method according to any one of claims 1 to 18 or claims 19 to 37.
